# EUROPEAN PATENT SPECIFICATION

(11) **EP 3 533 101 B1**
(45) Date of publication and mention of the grant of the patent: **05.05.2021**
(21) Application number: 17865587.4
(22) Date of filing: 25.10.2017
(51) Int. Cl.: H01M 4/505, H01M 10/0525, H01M 10/42, H01M 10/44, H01M 10/46, H01M 50/20, H01M 50/543, H02J 7/00, H01M 4/36, H01M 4/485, H01M 4/525, H01M 4/58, H01M 10/0567, H01M 10/48, H01M 50/116

(54) **BATTERY MODULE FOR STARTING A POWER EQUIPMENT**
BATTERIEMODUL ZUM STARTEN EINER STROMAUSRÜSTUNG
MODULE DE BATTERIE POUR DÉMARRER UN ÉQUIPEMENT ÉLECTRIQUE

(30) Priority: 31.10.2016 US 201615338456
(43) Date of publication of application: 04.09.2019
(73) Proprietor: GRST International Limited, Hong Kong (CN)
(72) Inventor: HO, Kam Piu, New Territories Hong Kong (CN); WANG, Ranshi, New Territories HongKong (CN); SHEN, Peihua, Guangzhou Guangdong 511340 (CN)
(74) Representative: Becker & Kurig Partnerschaft Patentanwälte PartmbB
(86) International application number: PCT/CN2017/107583
(87) International publication number: WO 2018/077174

(56) References cited:
- EP-A1- 2 980 887
- WO-A1-2016/017079
- WO-A2-2016/094475
- CN-A- 101 796 673
- CN-A- 102 136 601
- CN-A- 102 447 093
- CN-A- 103 427 110
- CN-U- 205 406 647
- US-A1- 2015 046 013

## Description

### FIELD OF THE INVENTION

This invention relates to battery module and more particularly to a lithium-ion battery module for use in starting engines of automobiles, trucks, boats and other applications like generators and industrial and farm machinery such as industrial engines and tractor engines.

### BACKGROUND OF THE INVENTION

Lithium-ion batteries (LIBs) have attracted extensive attention in the past two decades for a wide range of applications in portable electronic devices such as cellular phones and laptop computers. Due to rapid market development of electric vehicles (EV) and grid energy storage, high-performance, low-cost LIBs are currently offering one of the most promising options for large-scale and high power energy storage devices.

In general, a lithium ion battery includes a separator, a cathode and an anode. Currently, electrodes are prepared by dispersing fine powders of an active battery electrode material, a conductive agent, and a binder material in an appropriate solvent. The dispersion can be coated onto a current collector such as a copper or aluminum metal foil, and then dried at elevated temperature to remove the solvent. Sheets of the cathode and anode are subsequently stacked or rolled with the separator separating the cathode and anode to form a battery.

Depending on the power of the internal combustion engine of the outdoor power equipment, the required peak current may be several hundred amperes up to approximately 1,000 A. Lead-acid batteries are widely used for starting the internal combustion engines of vehicles, trucks, buses and the like. However, such lead-acid batteries have an undesirably high self-discharge rate. When the starting batteries are not being used for a long period of time, the batteries become depleted and are unable to start the engine. This problem can be even more serious when lead-acid batteries are stored at high temperatures since the rate of self-discharge increases as the temperature goes up.

There is another problem that frequently occurs with lead-acid batteries. The battery may not be able to deliver sufficient power at low temperature. Additional concerns occur if there is an emergency situation for which it is critical to start an engine, such as for starting an emergency vehicle, or starting a snow blower. Furthermore, lead-acid batteries have disadvantages of heavy weight and risk of electrolyte leaking from the battery. Therefore, alternative starting batteries are being sought.

U.S. Patent Application Publication No. 20160233694 A1 describes a lithium-ion battery pack for use to start an internal combustion engine. The battery pack comprises an outer housing; a plurality of battery cells enclosed in the outer housing; and a charging circuit enclosed in the outer housing and coupled to the plurality of battery cells, wherein the plurality of battery cells can be an NMC (nickel manganese cobalt) battery and/or a lithium iron phosphate battery. However, the battery pack does not include any features that allow the battery pack to satisfy the power needs in various temperature environments such as extremely cold environments.

CN Patent Application Publication No. 105161768 A describes a vehicle starting battery containing a cathode made of lithium iron phosphate (LiFePO₄). The starting battery includes at least four LiFePO₄ battery cells connected in parallel or in series. However, this starting battery may not work well in cold weather conditions because of deterioration of discharge performance of LiFePO₄ at low temperature, such as below about - 10 °C.

CN Patent Application Publication No. 103427110 A describes a vehicle starting battery containing a cathode made of lithium vanadium phosphate. The starting battery can be used in cold environments, such as -40 °C. However, there is no mention of the electrochemical performance of the starting battery except that under low temperature conditions. The lack of performance data limits us to gain a comprehensive understanding of such battery. In addition, the technology for large-scale production of lithium vanadium phosphate is not well proven, thereby offering considerable difficulty to commercial production. Furthermore, compared to cheaper materials like LiMn₂O₄ and LiFePO₄, the cathode material lithium vanadium phosphate has a disadvantage of relatively high cost.

WO 2016/017079 A1 discloses a positive electrode active material for lithium secondary battery, said material having a core-shell structure and comprising the same lithium transition metal oxide compound as constituent of the core and the shell. The described positive electrode material is employed in lithium secondary batteries which are grouped to form a battery pack in which an electronic circuit is used to control charging of the batteries.

US 2015/046013 A1 and CN 205 406 647 U refer to battery packs for starting the engine of a power equipment, comprising a plurality of interconnected lithium-ion secondary cells having a lithium composite oxide or lithium metal phosphate compound as cathode active material, in combination with an electronic device for controlling the charging power of the cells.

EP 2 980 887 A1 describes a battery module comprising six pieces of a non-aqueous electrolyte secondary battery, as well as a battery pack comprising said module and its use as power source for starting a vehicle, wherein the secondary battery comprises a lithium composite oxide as cathode active material.

In view of the above, there is always a need to develop more reliable devices for instantly providing power for starting the engines of outdoor power equipment such as automobiles, boats, trucks and tractors.

### SUMMARY OF THE INVENTION

The aforementioned needs are met by various aspects and embodiments disclosed herein.

The subject-matter of the present invention is defined in appended claim 1. Preferred embodiments are set out in the subclaims.

Provided herein is a battery module comprising:
an outer housing;
a plurality of interconnected lithium-ion battery cells enclosed in the outer housing; and
a voltage regulating device coupled to each lithium-ion battery cell for regulating the charging and/or discharging voltage of each lithium-ion battery cell,
wherein the battery module has a maximum pulse discharging current measured at -30 °C of not less than 15% of the maximum pulse discharging current measured at 25 °C over a pulse discharge period of about 5 seconds.

According to the present invention, the lithium-ion battery cells comprise an electrode assembly and an electrolyte, wherein the electrode assembly comprises at least one anode, at least one cathode and at least one separator interposed between the at least one anode and at least one cathode, and wherein the at least one anode comprises an anode current collector and an anode electrode layer comprising an anode material, a binder material and a conductive agent, and the at least one cathode comprises a cathode current collector and a cathode electrode layer comprising a cathode material, a binder material and a conductive agent.

In certain embodiments, the cathode material is selected from the group consisting of LiCoO₂, LiNiO₂, Li_{1+z}NiₓMn_{y}Co_{1-x-y}O₂, LiNiₓCo_{y}Al_{z}O₂, LiMnO₂,LiMn₂O₄, composites thereof, and combinations thereof, wherein each x is independently from 0.3 to 0.8; each y is independently from 0 to 0.45; and each z is independently from 0 to 0.2. In some embodiments, the particle size D50 of the cathode material is from about 10 µm to about 50 µm.

In some embodiments, the cathode material is spinel lithium manganese oxide having a Li/Mn ratio equal to or greater than 0.5.

In certain embodiments, the cathode material is a doped cathode material comprising a doping element selected from the group consisting of Fe, Ni, Mn, Co, Al, Mg, Zn, Ti, La, Ce, Sn, Zr, Ru, Si, Ge, and combinations thereof. In some embodiments, the doping element is present in an amount from about 0.5% to about 5% by weight, based on the total weight of the doped cathode material.

According to the present invention, the cathode material has a core-shell structure comprising a core and a shell, wherein each of the core and the shell is independently selected from the group consisting of LiCoO₂, LiNiO₂, Li_{1+z}NiₓMnyCo_{1-x-y}O₂, LiNiₓCo_{y}Al_{z}O₂, LiMnO₂, LiMn₂O₄, composites thereof, and combinations thereof, wherein each x is independently from 0.3 to 0.8; each y is independently from 0 to 0.45; and each z is independently from 0 to 0.2. In certain embodiments, the ratio of the diameter of the core to the thickness of the shell is from about 10 to about 25. In some embodiments, the core of the core-shell structure is a doped cathode material comprising a doping element selected from the group consisting of Fe, Ni, Mn, Co, Al, Mg, Zn, Ti, La, Ce, Sn, Zr, Ru, Si, Ge, and combinations thereof.

In certain embodiments, the anode material is selected from the group consisting of graphite, natural graphite particulate, synthetic graphite particulate, hard carbon, mesophase carbon, Sn particulate, Li₄Ti₅O₁₂ particulate, Si particulate, Si-C composite particulate, and combinations thereof. In some embodiments, the conductive agent in each of the cathode layer and anode layer is independently present in an amount from about 4% to about 10% by weight, based on the total weight of the cathode layer or anode layer.

In some embodiments, the density of each of the cathode and anode electrode layer is independently from about 1.0 g/cm³ to about 6.5 g/cm³. In certain embodiments, the thickness of each of the cathode and anode electrode layer is independently from about 1.0 µm to about 25 µm.

In certain embodiments, the at least one cathode is free of a polar organic solvent, wherein the polar organic solvent is selected from the group consisting of methyl propyl ketone, methyl isobutyl ketone, ethyl propyl ketone, diisobutyl ketone, acetophenone, N-methyl-2-pyrrolidone, acetone, tetrahydrofuran, dimethylformamide, acetonitrile, dimethyl sulfoxide, or a combination thereof.

In some embodiments, the water content of the electrode assembly is less than 20 ppm by weight, based on the total weight of the electrode assembly.

According to the present invention, the electrolyte comprises an additive selected from the group consisting of vinylene carbonate, diethylstilbestrol, butanesultone, dimethyl sulfide, and combinations thereof. In some embodiments, the additive is present in an amount from 0.1% to 2% by weight or volume, based on the total weight or volume of the electrolyte.

In some embodiments, each of the lithium-ion battery cells independently comprises a first conductive tab coupled to the cathode and a second conductive tab coupled to the anode, and wherein the width of each of the first and second conductive tabs is independently more than 2 cm.

In certain embodiments, the capacity retention of the battery module is not less than 50% of its initial capacity after storage for 7 days at 55°C.

In some embodiments, the battery module further comprises a safety module comprising a temperature sensor connected to each lithium-ion battery cell.

### BRIEF DESCRIPTION OF THE DRAWINGS

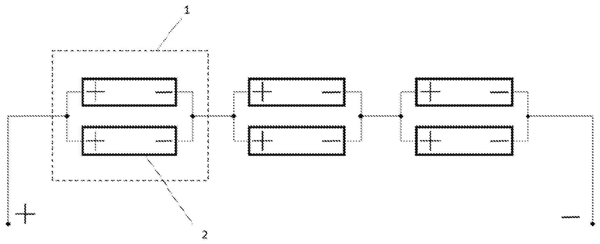

Figure 1 is a schematic diagram for a series-parallel connection of lithium-ion battery cells in the battery module of Example 1.

### DETAILED DESCRIPTION OF THE INVENTION

### General Definitions

The term "electrode" refers to a "cathode" or an "anode."

The term "positive electrode" is used interchangeably with cathode. Likewise, the term "negative electrode" is used interchangeably with anode.

The term "binder material" refers to a chemical or a substance used to hold the active electrode material for example cathode or anode material and conductive agent in place.

The term "current collector" refers to a support for coating the active electrode material and a chemically inactive high electron conductor for keeping an electric current flowing to electrodes during discharging or charging a secondary battery.

The term "C rate" refers to the charging or discharging rate of a cell or battery, expressed in terms of its total storage capacity in Ah or mAh. For example, a rate of 1 C means utilization of all of the stored energy in one hour; a 0.1 C means utilization of 10% of the energy in one hour or the full energy in 10 hours; and a 5 C means utilization of the full energy in 12 minutes.

The term "capacity" refers the total amount of electrical charge stored in an electrochemical cell, such as a battery cell or a battery module, is able to hold. Capacity is usually expressed in units of ampere-hour (Ah).

The term "electrochemical cell" refers to a device that converts chemical energy into electrical energy or electrical energy into chemical energy. Some non-limiting examples of the electrochemical cells include primary batteries, secondary batteries, lithium batteries, and lithium-ion batteries, etc.

The term "ampere-hour (Ah)" refers to a unit used in specifying the storage capacity of a battery. For example, a battery with 1 Ah capacity can supply a current of one ampere for one hour or 0.5 A for two hours, etc. Therefore, 1 Ampere-hour (Ah) is the equivalent of 3,600 coulombs of electrical charge. Similarly, the term "miniampere-hour (mAh)" also refers to a unit of the storage capacity of a battery and is 1/1,000 of an ampere-hour.

The term "slurry" refers to a dispersion of solid materials in a solvent.

The term "applied" or "applying" refers to an act of laying or spreading a substance on a surface.

The term "doctor blading" refers to a process for fabrication of large area films on rigid or flexible substrates. A coating thickness can be controlled by an adjustable gap width between a coating blade and a coating surface, which allows the deposition of variable wet layer thicknesses.

The term "transfer coating" or "roll coating" refers to a process for fabrication of large area films on rigid or flexible substrates. A slurry is applied on the substrate by transferring a coating from the surface of a coating roller with pressure. A coating thickness can be controlled by an adjustable gap width between a metering blade and a surface of the coating roller, which allows the deposition of variable wet layer thicknesses. In a metering roll system, the thickness of the coating is controlled by adjusting the gap between a metering roller and a coating roller.

The term "battery cycle life" refers to the number of complete charge/discharge cycles a battery can perform before its nominal capacity falls below 80% of its initial rated capacity.

The term "discharging current" refers to the current at which an electrochemical cell is discharged. Discharging current can be expressed in units of amperes.

The term "maximum pulse discharging current" refers to the maximum current at which an electrochemical cell in a fully-charged state can be discharged at the nominal voltage such as equal to 12 V or 24 V or a voltage higher than the nominal voltage of the electrochemical cell over a short period of time, for example, 3 seconds, 5 seconds, or 10 seconds.

The term "maximum pulse discharging rate" refers to the maximum current rate that an electrochemical cell in a fully-charged state can be discharged at the nominal voltage such as equal to 12 V or 24 V or a voltage higher than the nominal voltage of the electrochemical cell over a short period of time, for example, 3 seconds, 5 seconds, or 10 seconds.

The term "continuous discharging rate" refers to the maximum rate that an electrochemical cell in a fully-charged state can be discharged at the nominal voltage such as equal to 12 V or 24 V or a voltage higher than the nominal voltage of the electrochemical cell.

The term "nominal voltage" refers to the (rated) voltage across the terminals of the cell when it is loaded, and specifically refers to the average voltage on the plateau of the cell's discharge curve.

The term "charging current" refers to the current applied to charge a battery to restore its available capacity.

The term "maximum charging rate" refers to the maximum current rate that an electrochemical cell in a fully discharged state is charged to reach the upper limit voltage of the electrochemical cell and a capacity of not less than 80% of the nominal capacity of the electrochemical cell.

The term "nominal capacity" refers to the maximum electrical charge that can theoretically be stored in a battery cell or a battery module.

The term "electrode assembly" refers to a structure comprising at least one positive electrode, at least one negative electrode, and at least one separator interposed between the positive electrode and the negative electrode.

The term "room temperature" refers to indoor temperatures from about 18 °C to about 30 °C, e.g., 18, 19, 20, 21, 22, 23, 24, 25, 26, 27, 28, 29, or 30 °C. In some embodiments, room temperature refers to a temperature of about 20 °C +/- 1 °C or +/- 2 °C or +/- 3 °C. In other embodiments, room temperature refers to a temperature of about 22 °C or about 25 °C.

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, R^{L}, and an upper limit, R^{U}, is disclosed, any number falling within the range is specifically disclosed. In particular, the following numbers within the range are specifically disclosed: R=R^{L}+k*(R^{u}-R^{L}), wherein k is a variable ranging from 1 percent to 100 percent with a 1 percent increment, *i. e.,* k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent. Moreover, any numerical range defined by two R numbers as defined in the above is also specifically disclosed.

Provided herein is a battery module comprising: an outer housing; a plurality of interconnected lithium-ion battery cells enclosed in the outer housing; and a voltage regulating device coupled to each lithium-ion battery cell for regulating the charging and/or discharging voltage of each lithium-ion battery cell, wherein the battery module has a maximum pulse discharging current measured at -30 °C of not less than 15% of the maximum pulse discharging current measured at 25 °C over a pulse discharge period of about 5 seconds.

In other embodiments, the maximum pulse discharging current of the battery module disclosed herein measured at -30 °C is not less than 17%, not less than 18%, not less than 19%, not less than 20%, not less than 25%, or not less than 30% of the maximum pulse discharging current measured at 25 °C over a pulse discharge period of about 5 seconds.

Currently, lead-acid batteries are still typically used as standard vehicle batteries and other power equipment. However, drawbacks of the lead-acid batteries include high self-discharge, poor performance in cold weather and significant degradation with age. Lithium-ion battery is now considered as a potential replacement for the lead-acid batteries for combustion engine starting application. So far, no prior art document describes a lithium-ion battery that has high performance at low temperature and a low self-discharging rate. The usability of lithium-ion batteries can be expanded if their allowable operation temperature range is extended.

In certain embodiments, the lithium-ion battery cells comprise at least one anode, at least one cathode and at least one separator interposed between the at least one anode and at least one cathode, wherein the at least one anode comprises an anode current collector and an anode electrode layer comprising an anode material, a binder material and a conductive agent, and the at least one cathode comprises a cathode current collector and a cathode electrode layer comprising a cathode material, a binder material and a conductive agent.

In some embodiments, the cathode material is selected from the group consisting of LiCoO₂ (LCO), LiNiO₂ (LNO), Li_{1+z}NiₓMn_{y}Co_{1-x-y}O₂, LiNiₓCo_{y}Al_{z}O₂, LiMnO₂, LiMn₂O₄ (LMO), and combinations thereof, wherein each x is independently from 0.3 to 0.8; each y is independently from 0.1 to 0.45; and each z is independently from 0 to 0.2. In certain embodiments, the cathode material is selected from the group consisting of LiNiₓMn_{y}O₂, Li_{1+z}NiₓMn_{y}Co_{1-x-y}O₂, LiMnO₂, LiMn₂O₄, and combinations thereof, wherein each x is independently from 0.4 to 0.6; each y is independently from 0.2 to 0.4; and each z is independently from 0 to 0.1. In some embodiments, the cathode material is Li₁₊ₓMn_{2-y}O₄, wherein each x is from 0 to 0.2; and each y is from 0 to 0.15. In certain embodiments, the cathode material is lithium manganese oxide having a Li/Mn ratio equal to or greater than 0.5. In other embodiments, the cathode material is not LiCoO₂, LiNiO₂, LiMnO₂, or LiMn₂O₄. In some embodiments, the cathode material is LiNi_{0.3}Mn_{0.3}Co_{0.3}O₂ (NMC333), LiNi_{0.4}Mn_{0.4}Co_{0.2}O₂ (NMC442), LiNi_{0.5}Mn_{0.3}Co_{0.2}O₂ (NMC532), LiNi_{0.6}Mn_{0.2}Co_{0.2}O₂ (NMC622), LiNi_{0.8}Mn_{0.1}CO_{0.1}O₂ (NMC811), or LiNi_{0.8}CO_{0.15}Al_{0.05}O₂ (NCA). In further embodiments, the cathode material is not Li_{1+z}NiₓMn_{y}Co_{1-x-y}O₂, or LiNiₓCo_{y}Al_{z}O₂, wherein each x is independently from 0.3 to 0.8; each y is independently from 0.1 to 0.45; and each z is independently from 0 to 0.2.

Among different cathode materials, lithium ternary transition metal oxides containing Ni, Mn, and Co have high capacity per unit weight. On the other hand, LMO has an advantage of use of manganese which is abundant as a raw material and is a low-cost, safe alternative.

In general, the battery module for starting engine application is installed and kept in close proximity to the engine. Therefore, starter batteries must be able to operate at high temperatures. LMO has the problem of capacity fade and poor cycling performance at elevated temperatures due to dissolution of manganese into the electrolyte. Furthermore, phase transition of LMO occurring during intercalation and de-intercalation processes leads to distortion of the crystal structure, affecting the structural integrity of LMO. At low temperatures, the conductivity of electrode and electrolyte is lowered. Therefore, a battery module using LMO as cathode material having excellent electrochemical performance at high and low temperatures to supply power for machine engine is needed.

To suppress the capacity fade and improve cycling stability at elevated temperatures, the cathode material can be doped with a doping element. A doped cathode material has higher structural stability. Hence, dissolution of manganese into electrolyte especially at elevated temperature is reduced and the performance of lithium-ion batteries such as LMO at extreme temperatures is improved. In certain embodiments, cathode comprising doped cathode material has improved electrical conductivity at low temperatures (0 °C to -30 °C). In some embodiments, the cathode material comprises a doping element selected from the group consisting of Fe, Ni, Mn, Co, Al, Mg, Zn, Ti, La, Ce, Sn, Zr, Ru, Si, Ge and combinations thereof. In certain embodiments, the cathode material is doped with at least one doping element selected from Fe, Ni, Mn, Co, Al, Mg, Zn and Ti. In some embodiments, the cathode material is doped with at least one doping element selected from La, Ce, Sn, Zr, Ru, Si and Ge. In other embodiments, the doping element is not Fe, Ni, Mn, Co, Al, Mg, Zn or Ti. In still other embodiments, the doping element is not La, Ce, Sn, Zr, Ru, Si or Ge. In some embodiments, the cathode material is doped with at least two different elements selected from Fe, Ni, Mn, Co, Al, Mg, Zn, Ag, Cr, Co, Cu, Ti and Zr. In further embodiments, the cathode material is doped with at least two different elements selected from Fe, Ni, Mn, Co, Al, Mg, Zn, and Ti.

If the amount of doping element is too high, the crystal structure of the cathode material will be substantially changed, thereby affecting structural stability of the cathode material during charge and discharge. In certain embodiments, the doping element is present in an amount from about 0.5% to about 5%, from about 0.5% to about 4.5%, from about 0.5% to about 4%, from about 0.5% to about 3.5%, from about 0.5% to about 3%, from about 0.5% to about 2.5%, from about 0.5% to about 2%, from about 1% to about 5%, from about 1% to about 4%, from about 1% to about 3%, from about 1.5% to about 4%, from about 1.5% to about 3%, from about 2% to about 4%, or from about 2% to about 3% by weight, based on the total weight of the doped cathode material. In some embodiments, the doping element is present in an amount less than 5%, less than 4.5%, less than 4%, less than 3.5%, less than 3%, less than 2.5%, less than 2%, less than 1.5%, or less than 1% by weight, based on the total weight of the doped cathode material. In certain embodiments, the doping element is present in an amount more than 0.5%, more than 1%, more than 1.5%, more than 2%, more than 2.5%, more than 3%, more than 3.5%, more than 4%, or more than 4.5% by weight, based on the total weight of the doped cathode material.

In some embodiments, the doping element is present in an amount from about 0.1% to about 5%, from about 0.1% to about 4%, from about 0.1% to about 3%, from about 0.1% to about 2%, or from about 0.1% to about 1% by weight, based on the total weight of the cathode electrode layer. In certain embodiments, the doping element is present in an amount less than 5%, less than 4%, less than 3%, less than 2%, or less than 1% by weight, based on the total weight of the cathode electrode layer. In some embodiments, the doping element is present in an amount more than 0.1%, more than 0.5%, more than 1%, more than 2%, more than 3%, or more than 4% by weight, based on the total weight of the cathode electrode layer.

Cathode materials having core-shell structure can also suppress the dissolution of Mn ions into electrolyte and capacity fade at elevated temperatures. In some embodiments, the cathode material comprises or is a core-shell composite having a core and shell structure, wherein the core and the shell each independently comprise a lithium transition metal oxide selected from the group consisting of LiCoO₂, LiNiO₂, Li_{1+z}NiₓMn_{y}Co_{1-x-y}O₂, LiNiₓCo_{y}Al_{z}O₂, LiMnO₂, LiMn₂O₄, and combinations thereof, wherein each x is independently from 0.3 to 0.8; each y is independently from 0.1 to 0.45; and each z is independently from 0 to 0.2. In other embodiments, the core and the shell each independently comprise two or more lithium transition metal oxides. The two or more lithium transition metal oxides in the core and the shell may be the same, or may be different or partially different. In some embodiments, the two or more lithium transition metal oxides are uniformly distributed over the core. In certain embodiments, the two or more lithium transition metal oxides are not uniformly distributed over the core.

In some embodiments, each of the lithium transition metal oxides in the core and the shell is independently doped with a doping element selected from the group consisting of Fe, Ni, Mn, Co, Al, Mg, Zn, Ti, La, Ce, Sn, Zr, Ru, Si, Ge, and combinations thereof.

In certain embodiments, the diameter of the core of the cathode material is from about 5 µm to about 45 µm, from about 5 µm to about 40 µm, from about 5 µm to about 35 µm, from about 5 µm to about 30 µm**,** from about 5 µm to about 25 µm, from about 10 µm to about 50 µm, from about 10 µm to about 45 µm, from about 10 µm to about 40 µm, from about 10 µm to about 35 µm, from about 10 µm to about 30 µm, from about 15 µm to about 45 µm, from about 15 µm to about 30 µm, from about 15 µm to about 25 µm, from about 20 µm to about 50 µm, from about 20 µm to about 40 µm, from about 20 µm to about 30 µm, or from about 20 µm to about 35 µm. In some embodiments, the diameter of the core of the cathode material is less than 50 µm, less than 40 µm, less than 30 µm, or less than 20 µm. In certain embodiments, the diameter of the core of the cathode material is more than 10 µm, more than 20 µm, more than 30 µm, or more than 40 µm.

If the thickness of the shell of the cathode material is too large, the lithium ion conductivity will be reduced. In some embodiments, the thickness of the shell of the cathode material is from about 0.1 µm to about 5 µm, from about 0.1 µm to about 4.5 µm, from about 0.1 µm to about 4 µm, from about 0.1 µm to about 3 µm, from about 0.1 µm to about 2.5 µm, from about 0.5 µm to about 5 µm, from about 0.5 µm to about 4 µm, from about 0.5 µm to about 3 µm, from about 0.5 µm to about 2 µm, from about 1 µm to about 5 µm, or from about 1 µm to about 3 µm. In certain embodiments, the thickness of the shell of the cathode material is less than 5 µm, less than 4.5 µm, less than 4 µm, less than 3.5 µm, less than 3 µm, less than 2.5 µm, less than 2 µm, or less than 1.5 µm. In some embodiments, the thickness of the shell of the cathode material is more than 0.1 µm, more than 0.5 µm, more than 1 µm, more than 1.5 µm, more than 2 µm, more than 2.5 µm, more than 3 µm, more than 3.5 µm, more than 4 µm, or more than 4.5 µm.

In certain embodiments, the ratio of the diameter of the core to the thickness of the shell is from about 5 to about 25, from about 5 to about 20, from about 5 to about 15, from about 5 to about 12, from about 5 to about 10, from about 10 to about 25, from about 10 to about 20, from about 10 to about 15, or from about 12 to about 20. In some embodiments, the ratio of the diameter of the core to the thickness of the shell is less than 25, less than 20, less than 15, or less than 12. In certain embodiments, the ratio of the diameter of the core to the thickness of the shell is more than 10, more than 12, more than 15, or more than 20.

In certain embodiments, the cathode material has a particle size D50 from about 10 µm to about 50 µm, from about 10 µm to about 45 µm, from about 10 µm to about 40 µm, from about 10 µm to about 35 µm, from about 10 µm to about 30 µm, from about 15 µm to about 50 µm, from about 15 µm to about 40 µm, from about 20 µm to about 50 µm, from about 25 µm to about 50 µm, from about 25 µm to about 40 µm, from about 15 µm to about 40 µm, or from about 20 µm to about 40 µm. In some embodiments, the cathode material has a particle size D50 less than 50 µm, less than 45 µm, less than 40 µm, less than 35 µm, less than 30 µm, less than 25 µm, or less than 20 µm. In certain embodiments, the cathode material has a particle size D50 more than 10 µm, more than 15 µm, more than 20 µm, more than 25 µm, more than 30 µm, more than 35 µm, or more than 40 µm. Smaller cathode particle size gives the battery higher charging/discharging capability for shorter lithium ion transportation path in the cathode. However, larger cathode particle size helps improve the battery stability at elevated temperature due to less reaction with electrolyte, and thus reducing the dissolution of Mn ions into the electrolyte.

In some embodiments, the cathode material has a particle size D10 from about 3 µm to about 20 µm, from about 3 µm to about 10 µm, from about 3 µm to about 8 µm, from about 1 µm to about 10 µm, from about 1 µm to about 8 µm, from about 1 µm to about 5 µm, from about 2 µm to about 10 µm, from about 2 µm to about 5 µm, or from about 2 µm to about 8 µm.

In certain embodiments, the cathode material has a particle size D90 from about 20 µm to about 80 µm, from about 30 µm to about 80 µm, from about 40 µm to about 80 µm, from about 50 µm to about 80 µm, from about 30 µm to about 70 µm, from about 30 µm to about 60 µm, from about 20 µm to about 50 µm, from about 20 µm to about 60 µm, or from about 40 µm to about 60 µm.

The nature of the anode material influences the resulting voltage of the battery since the voltage is the difference between the half-cell potentials at the cathode and anode. In some embodiments, the anode material is selected from the group consisting of graphite, natural graphite particulate, synthetic graphite particulate, hard carbon, mesophase carbon, Sn (tin) particulate, Li₄Ti₅O₁₂ (LTO) particulate, Si (silicon) particulate, Si-C composite particulate, and combinations thereof. In other embodiments, the anode material is not natural graphite particulate, synthetic graphite particulate, hard carbon, mesophase carbon, Sn (tin) particulate, Li₄Ti₅O₁₂ particulate, Si (silicon) particulate, or Si-C composite particulate.

In certain embodiments, the amount of each of the cathode and anode materials is independently at least 50%, at least 55%, at least 60%, at least 65%, at least 70%, at least 75%, at least 80%, at least 85%, at least 90%, or at least 95% by weight, based on the total weight of the cathode or anode electrode layer. In some embodiments, the amount of each of the cathode and anode materials is independently at most 50%, at most 55%, at most 60%, at most 65%, at most 70%, at most 75%, at most 80%, at most 85%, at most 90%, or at most 95% by weight, based on the total weight of the cathode or anode electrode layer.

In some embodiments, the amount of the cathode material is between 50% and 95%, between 70% and 95%, between 70% and 92%, between 75% and 90%, between 80% and 95%, between 80% and 90%, between 85% and 95%, between 85% and 90%, or between 90% and 95% by weight, based on the total weight of the cathode electrode layer.

Other components such as conductive agent and binder material in electrode layers will also affect the performance of lithium-ion batteries over time at different rates. The conductive agent in the electrode layers is for enhancing the electrically-conducting property of an electrode. In some embodiments, the conductive agent is selected from the group consisting of carbon, carbon black, graphite, expanded graphite, graphene, graphene nanoplatelets, carbon fibres, carbon nano-fibers, graphitized carbon flake, carbon tubes, carbon nanotubes, activated carbon, mesoporous carbon, and combinations thereof. In certain embodiments, the conductive agent is not carbon, carbon black, graphite, expanded graphite, graphene, graphene nanoplatelets, carbon fibres, carbon nano-fibers, graphitized carbon flake, carbon tubes, carbon nanotubes, activated carbon, or mesoporous carbon.

The binder material in the electrode layers performs a role of binding the active electrode material and conductive agent together on the current collector. In some embodiments, the binder material is selected from the group consisting of styrene-butadiene rubber (SBR), carboxymethyl cellulose (CMC), polyvinylidene fluoride (PVDF), acrylonitrile copolymer, polyacrylic acid (PAA), polyacrylonitrile, poly(vinylidene fluoride)-hexafluoropropene (PVDF-HFP), latex, LA132, LA133, a salt of alginic acid, and combinations thereof. In certain embodiments, the salt of alginic acid comprises a cation selected from Na, Li, K, Ca, NH₄, Mg, Al, or a combination thereof.

In some embodiments, the binder material is SBR, CMC, PAA, a salt of alginic acid, or a combination thereof. In certain embodiments, the binder material is acrylonitrile copolymer. In some embodiments, the binder material is polyacrylonitrile. In certain embodiments, the binder material is free of styrene-butadiene rubber (SBR), carboxymethyl cellulose (CMC), polyvinylidene fluoride (PVDF), acrylonitrile copolymer, polyacrylic acid (PAA), polyacrylonitrile, poly(vinylidene fluoride)-hexafluoropropene (PVDF-HFP), latex, LA132, LA133, or a salt of alginic acid.

In certain embodiments, the amount of each of the conductive agent and binder material in the cathode or anode electrode layer is independently at least 1%, at least 2%, at least 3%, at least 4%, at least 5%, at least 6%, at least 7%, at least 8%, at least 9%, at least 10%, at least 15%, at least 20%, at least 25%, at least 30%, at least 35%, at least 40%, at least 45%, or at least 50% by weight, based on the total weight of the cathode or anode electrode layer. In certain embodiments, the amount of each of the conductive agent and binder material in the cathode or anode electrode layer is independently at most 1%, at most 2%, at most 3%, at most 4%, at most 5%, at most 6%, at most 7%, at most 8%, at most 9%, at most 10%, at most 15%, at most 20%, at most 25%, at most 30%, at most 35%, at most 40%, at most 45%, or at most 50% by weight, based on the total weight of the cathode or anode electrode layer.

In some embodiments, the amount of the conductive agent in each of the cathode and anode electrode layers is independently from about 0.05% to about 0.5%, from about 0.1% to about 1%, from about 0.25% to about 2.5%, from about 0.5% to about 10%, from about 0.5% to about 7.5%, from about 0.5% to about 5%, from about 2% to about 10%, from about 2% to about 7.5%, from about 2% to about 5%, from about 3% to about 7%, from about 4% to about 10%, from about 4% to about 8%, from about 4% to about 6%, or from about 5% to about 10% by weight, based on the total weight of the cathode or anode electrode layer.

In certain embodiments, the amount of the binder material in each of the cathode and anode electrode layers is independently from about 1% to about 8%, from about 1% to about 6%, from about 1% to about 5%, from about 1% to about 3%, from about 1.5% to about 3%, from about 2.5% to about 5%, from about 2.5% to about 4.5%, from about 2.5% to about 4%, from about 3.7% to about 7.5%, from about 5% to about 10%, from about 7.5% to about 12.5%, from about 10% to about 20%, or from about 17.5% to about 25% by weight, based on the total weight of the cathode or anode electrode layer.

The current collector acts to collect electrons generated by electrochemical reactions of the active electrode material or to supply electrons required for the electrochemical reactions. In some embodiments, each of the current collectors of the positive and negative electrodes, which can be in the form of a foil, sheet or film, is independently stainless steel, titanium, nickel, aluminum, copper or electrically-conductive resin. In certain embodiments, the current collector of the positive electrode is an aluminum thin film. In some embodiments, the current collector of the negative electrode is a copper thin film. In certain embodiments, the surface of the current collector is not pre-treated.

In some embodiments, the current collector has a thickness from about 6 µm to about 30 µm since thickness will affect the volume occupied by the current collector within a battery and the amount of the active electrode material and hence the capacity in the battery.

A slurry can be applied on a current collector to form a coated film on the current collector. The solvent used in the slurry can be any polar organic solvent. Some non-limiting examples of the polar organic solvent include methyl propyl ketone, methyl isobutyl ketone, ethyl propyl ketone, diisobutyl ketone, acetophenone, N-methyl-2-pyrrolidone (NMP), acetone, tetrahydrofuran, dimethylformamide, acetonitrile, dimethyl sulfoxide, and the like.

An aqueous solvent can also be used for producing the slurry. Transition to an aqueous-based process may be desirable to reduce emissions of volatile organic compound, and increase processing efficiency. The cathode of the present invention can be prepared with water as a solvent. In certain embodiments, the solvent used in the slurry is a solution containing water as the major component and a volatile solvent, such as alcohols, lower aliphatic ketones, lower alkyl acetates or the like, as the minor component in addition to water. In some embodiments, the amount of water is at least 50%, at least 55%, at least 60%, at least 65%, at least 70%, at least 75%, at least 80%, at least 85%, at least 90%, or at least 95% to the total amount of water and solvents other than water. In certain embodiments, the amount of water is at most 55%, at most 60%, at most 65%, at most 70%, at most 75%, at most 80%, at most 85%, at most 90%, or at most 95% to the total amount of water and solvents other than water. In some embodiments, the solvent consists solely of water, that is, the proportion of water in the solvent is 100 vol.%.

Any water-miscible solvents can be used as the minor component. Some non-limiting examples of the minor component (*i.e.,* solvents other than water) include alcohols, lower aliphatic ketones, lower alkyl acetates and combinations thereof. Some non-limiting examples of the alcohol include C₁-C₄ alcohols, such as methanol, ethanol, isopropanol, n-propanol, butanol, and combinations thereof. Some non-limiting examples of the lower aliphatic ketones include acetone, dimethyl ketone, and methyl ethyl ketone. Some non-limiting examples of the lower alkyl acetates include ethyl acetate, isopropyl acetate, and propyl acetate.

One of the advantages of the present invention is that the formulation of the cathode slurry prevents agglomeration of particles in water without the use of surfactant and allows rapid drying of the cathode slurry when coated on a current collector. When changing from using traditional solvent such as NMP to water, agglomeration of the particles of cathode slurry component may occur. The surface tension among all components should be as low as possible to enhance compatibility. Agglomeration of particles may affect the electrochemical performance of battery at high and low temperatures. Various methods have been proposed to tackle this problem, for example, by adding a dispersing agent to lower the surface tension of the cathode slurry. In some embodiments, the cathode slurry does not comprise an additive. In certain embodiments, the cathode slurry does not comprise a surfactant such as nonionic surfactant, an anionic surfactant, a cationic surfactant, an amphoteric surfactant.

Using water as a solvent for cathode slurry is more environmentally friendly than using NMP as a solvent. In some embodiments, the at least one cathode is free of polar organic solvent, wherein the polar organic solvent is selected from the group consisting of methyl propyl ketone, methyl isobutyl ketone, ethyl propyl ketone, diisobutyl ketone, acetophenone, NMP, acetone, tetrahydrofuran, dimethylformamide, acetonitrile, dimethyl sulfoxide, or a combination thereof.

After drying the coated electrode, the dried electrode can be pressed using calendering rolls, a press with a die or other suitable processing apparatus to compress the electrodes to a desired thickness. The rate of transport of lithium ions across the electrode thickness limits the power. When the electrode thickness is low, the lithium ion diffusion distance can be decreased for charge or discharge. In some embodiments, the thickness of each of the cathode and anode electrode layers is independently from about 1.0 µm to about 40 µm or from about 1.0 µm to about 25 µm.

The effective ionic conductivity in an electrode layer is believed to decrease rapidly with decreasing pore volume fraction, since the pores are filled with ion conducting electrolyte. Thus, it is important that the volume fraction of active material can be optimized without sacrificing the capacity. In certain embodiments, the density of each of the cathode and anode electrode layers on the current collector is independently from about 1.0 g/cm³ to about 6.5 g/cm³, from about 1.0 g/cm³ to about 5.0 g/cm³, from about 1.0 g/cm³ to about 4.0 g/cm³, from about 1.0 g/cm³ to about 3.5 g/cm³, from about 1.0 g/cm³ to about 3.0 g/cm³, from about 1.0 g/cm³ to about 2.0 g/cm³, from about 2.0 g/cm³ to about 5.0 g/cm³, from about 2.0 g/cm³ to about 4.0 g/cm³, from about 3.0 g/cm³ to about 5.0 g/cm³, or from about 3.0 g/cm³ to about 6.0 g/cm³. In some embodiments, the density of the cathode electrode layer on the current collector is from about 1.0 g/cm³ to about 3.5 g/cm³. Electrode layer having such a density introduces a desired porosity in the electrode, thereby promoting ion transport.

A battery can comprise a negative electrode, a positive electrode and a separator positioned between negative electrode and positive electrode. The separator must have electrical insulation property and be permeable to lithium ions to ensure the ion transport between the positive and the negative electrodes. In some embodiments, the separator may comprise woven or nonwoven polymeric fibers, natural fibers, carbon fibers, glass fibers or ceramic fibers. In certain embodiments, the separator comprises woven or nonwoven polymeric fibers.

In some embodiments, the fibers of the woven or nonwoven are made of polyolefin, polyethylene, high-density polyethylene, linear low-density polyethylene, low-density polyethylene, ultrahigh-molecular-weight polyethylene, polypropylene, polypropylene/polyethylene co-polymer, polybutylene, polypentene, polyacetal, polyamide, polycarbonate, polyimide, polyetherether ketone, polysulfones, polyphenylene oxide, polyphenylene sulfide, polyacrylonitrile, polyvinylidene fluoride, polyoxymethylene, polyvinyl pyrrolidone, polyester, polyethylene terephthalate, polybutylene terephthalate, polyethylene naphthalene, polybutylene naphthalate, or a combination thereof.

In certain embodiments, the separator has a melting point of 100 °C or higher, 120 °C or higher, 140 °C or higher, 160 °C or higher, 180 °C or higher, 200 °C or higher, or 250 °C or higher. The separator having high melting point shows high thermal stability.

In some embodiments, the separator has a thickness from about 1.0 µm to about 40 µm, or from about 1.0 µm to about 25 µm. Thinner separators allow an increased packing density in a battery pack since a larger amount of energy can be stored in the same volume.

In certain embodiments, the separator has an average pore size from about 1 nm to about 350 nm, from about 1 nm to about 100 nm, from about 20 nm to about 100 nm, from about 40 nm to about 350 nm, from about 40 nm to about 80 nm, from about 50 nm to about 80 nm, from about 0.1 µm to about 70 µm, from about 1 µm to about 60 µm, from about 1 µm to about 50 µm, from about 1 µm to about 40 µm, from about 1 µm to about 30 µm, from about 1 µm to about 20 µm, from about 1 µm to about 10 µm, from about 1 µm to about 5 µm, or from about 1 µm to about 3 µm. A separator having high average pore size can yield a battery with a good ion permeability.

The nonwoven fabric may be produced by a publicly known process. Some non-limiting examples of suitable process include dry process, spun bond process, water needle process, spun lace process, wet process, melt-blowing process and the like. In some embodiments, the separator is formed by a dry stretching process, a wet laid process, a dry laid process, or an electrospinning process. In other embodiments, the separator film is a porous multi-layered film.

The separator can be in a coated or uncoated form. In certain embodiments, the separator is coated and comprises a porous base material and a protective porous layer coated on one or both surfaces of the porous base material, wherein the protective porous layer comprises a binder material and an inorganic filler. In some embodiments, the inorganic filler is selected from the group consisting of Al₂O₃, SiO₂, TiO₂, ZrO₂, BaOₓ, ZnO, CaCO₃, TiN, A1N, and combinations thereof, wherein x is 1 or 2. In certain embodiments, the separator is uncoated and does not comprise a protective porous layer.

An electrolyte comprising a dissolved lithium salt is added to the electrode assembly. Electrolyte in contact with the electrodes provides ionic conductivity through the separator between electrodes of opposite polarity. The electrode assembly and electrolyte are sealed within a suitable container.

In certain embodiments, the lithium-ion battery cell is a pouch battery cell. A pouch battery comprises a battery structure sealed within a pouch. Various containers are known in the art. In some embodiments, the container is an aluminum foil bag. The aluminum foil can provide appropriate form and mechanical strength to the pouch material. Generally, each side of the aluminum foil is covered with one or more polymer layers. When a flexible pouch is used as the container of a lithium battery, the thickness of the resulting battery is substantially reduced compared with using a can as the container. In addition, more electrodes can be contained in the same volume. This increases the power storage capacity of the battery. The battery can be easily manufactured in any desired shape due to the flexible nature of the container. Therefore, the pouch batteries can provide a compact design of a battery pack with high energy output. In other embodiments, the lithium-ion battery cell is a cylindrical battery cell.

To achieve the desired battery capacities, the batteries can be designed to include 10 to 100 positive electrode plates. In some embodiments, the number of the positive electrode plates in a pouch battery is from about 15 to about 80, from about 15 to about 60, from about 20 to about 70, from about 20 to about 50, from about 25 to about 60, from about 25 to about 50, or from about 20 to about 50. The positive and negative electrodes are stacked in an alternating pattern.

In some embodiments, the capacity of each lithium-ion battery cell in the battery module is from about 5 Ah to about 30 Ah, from about 5 Ah to about 25 Ah, from about 5 Ah to about 20 Ah, from about 5 Ah to about 15 Ah, from about 7.5 Ah to about 20 Ah, from about 7.5 Ah to about 15 Ah, from about 10 Ah to about 15 Ah, or from about 9 Ah to about 12 Ah. In certain embodiments, each lithium-ion battery cell has a capacity of not less than 5 Ah, not less than 8 Ah, not less than 10 Ah, or not less than 15 Ah.

Depending on the power of the internal combustion engine of the vehicle, the required peak current may be a hundred ampere up to approximately 1,000 A. In order to realize such a high output property and a high current property, it is important to reduce an internal resistance of a battery as much as possible. The current collectors in the lithium-ion battery cell are electrically connected to conductive tabs that extend from the pouch. In some embodiments, a cutting process can be used to remove the unwanted portion of the current collector leaving a current collector tab in the desired location. In other embodiments, an electrode foil may be welded to the electrode to serve as a current collector tab. In certain embodiments, the conductive tabs may be attached to the uncoated portions of the positive and negative current collectors by welding. Some non-limiting examples of suitable welding methods include ultrasonic welding, laser welding and spot-welding. In some embodiments, the conductive tab for positive electrode may be formed of aluminum or an aluminum alloy, whereas the conductive tab for negative electrode may be formed of nickel or a nickel alloy. When the pouch is sealed, the conductive tabs can be used to connect the lithium-ion battery cell to an external circuit. It is preferred to have wider tabs for reducing resistance and allowing high current flow.

In some embodiments, each of the conductive tabs for the cathode and anode independently has a width from about 2 cm to about 7 cm, from about 2 cm to about 6 cm, from about 2 cm to about 5 cm, from about 2 cm to about 4 cm, from about 3 cm to about 7 cm, from about 3 cm to about 6 cm, or from about 3 cm to about 4.5 cm. In certain embodiments, each of the cathode and anode conductive tabs independently has a width greater than 2 cm, greater than 2.5 cm, greater than 3 cm, greater than 3.5 cm, or greater than 4 cm. In other embodiments, each of the cathode and anode conductive tabs independently has a width less than 7 cm, less than 6 cm, less than 5.5 cm, less than 5 cm, or less than 4.5 cm.

Since connection points between the conductive tabs and the uncoated portions of the positive and negative current collectors in pouch battery are numerous, the impedance to current flow through the tabs is reduced. Some designs of cylindrical battery have only one current collector tab for each of the cathode and anode. Having more current collectors tabs can lower cell impedance and improve overall cell performance. Because of this reason, the jelly roll preferably has one current collector tab per winding to reduce impedance. However, alignment of the current collector tabs in the rolled jelly roll has proven to be a difficult task since the roll itself must be precisely wound in order for the current collector tabs to align. Thus, the manufacturing process of cylindrical battery having multiple current collector tabs is expensive and complicated.

Water is one of the key factors needed to be strictly controlled in the production process of lithium-ion batteries. A battery with high water content may lead to serious attenuation of electrochemical performance and affect stability of battery.

The water content in the dried electrode assembly and the lithium-ion battery cell has to be strictly controlled. If there is too much water present in the battery, the dissolution rate of Mn increases because of the formation of HF in the electrolyte solution. The electrode assembly of the present invention has a particularly low water content, contributing to reliable performance of the lithium-ion batteries. In some embodiments, the water content in the dried electrode assembly is from about 5 ppm to about 50 ppm, from about 5 ppm to about 40 ppm, from about 5 ppm to about 30 ppm, from about 5 ppm to about 20 ppm, from about 5 ppm to about 10 ppm, from about 3 ppm to about 30 ppm, from about 3 ppm to about 20 ppm, or from about 3 ppm to about 10 ppm by weight, based on the total weight of the dried electrode assembly.

In certain embodiments, the water content in the dried electrode assembly is less than 50 ppm, less than 40 ppm, less than 30 ppm, less than 20 ppm, less than 19 ppm, less than 18 ppm, less than 17 ppm, less than 16 ppm, less than 15 ppm, less than 14 ppm, less than 13 ppm, less than 12 ppm, less than 11 ppm, less than 10 ppm, less than 9 ppm, less than 8 ppm, less than 7 ppm, less than 6 ppm, or less than 5 ppm by weight, based on the total weight of the dried electrode assembly. In some embodiments, the dried electrode assembly disclosed herein has a water concentration therein no greater than about 20 ppm by weight, based on the total weight of the dried electrode assembly.

An electrode assembly is dried before filing electrolyte. In certain embodiments, the electrode assembly can be dried under vacuum at a temperature from about 70 °C to about 155 °C. In some embodiments, the electrode assembly can be dried under vacuum at a temperature of about 80 °C or higher, about 90 °C or higher, about 100 °C or higher, about 110 °C or higher, about 120 °C or higher, or about 130 °C or higher.

In some embodiments, the electrode assembly is dried under atmospheric pressure. In certain embodiments, the drying is performed in a vacuum state. In some embodiments, the vacuum state is maintained at a pressure within the range from about 1 × 10⁻⁴ Pa to about 5 × 10⁴ Pa, from about 1 × 10⁻⁴ Pa to about 2.5 × 10⁴ Pa, from about 1 × 10⁻⁴ Pa to about 1 × 10⁴ Pa, from about 1 × 10⁻⁴ Pa to about 5 × 10³ Pa, from about 1 × 10⁻⁴ Pa to about 1 × 10³ Pa, from about 1 × 10³ Pa to about 5 × 10⁴ Pa, from about 1 × 10³ Pa to about 1 × 10⁴ Pa, or from about 1 × 10³ Pa to about 5 × 10³ Pa.

After a predetermined drying time period, the drying chamber vents directly to a gas reservoir containing dry air or inert gas via a gas inlet valve. Gas filling can enhance the removal of water vapour from the drying chamber, thereby increasing the removal efficiency of water from the electrode assembly and shorten the drying cycle. In some embodiments, the gas reservoir is a nitrogen gas cylinder. In certain embodiments, the inert gas is selected from the group consisting of helium, argon, neon, krypton, xenon, nitrogen, carbon dioxide, and combinations thereof. In some embodiments, the water content of the dry air or inert gas is maintained at a level of less than or equal to 10 ppm, or less than or equal to 5 ppm.

In some embodiments, the dry air or inert gas is preheated before entering the drying chamber. In certain embodiments, the temperature of the dry air or inert gas is from about 70 °C to about 130 °C, from about 70 °C to about 110 °C, from about 70 °C to about 100 °C, from about 70 °C to about 90 °C, from about 70 °C to about 80 °C, or from about 80 °C to about 155 °C.

In certain embodiments, the dry air or inert gas stays in the drying chamber for a time period from about 30 seconds to about 2 hours, from about 1 minute to about 1 hour, from about 5 minutes to about 30 minutes, from about 5 minutes to about 15 minutes, or from about 5 minutes to about 10 minutes.

Lithium-ion batteries should be able to be operated in a wide temperature range. The disability of lithium-ion batteries at low-temperature operations can be caused by the limited ionic transport properties of the electrolyte and sluggish Li⁺ desolvation. In some embodiments, the electrolyte is a non-aqueous organic solvent selected from a carbonate-based, ester-based, ether-based or other aprotic solvent. One reason for the successful operation over a wide temperature range lies in the basic properties of solvent, such as high ionic conductivity, low viscosity, low freezing point and high boiling point.

Some non-limiting examples of the carbonate-based solvent include dimethyl carbonate (DMC), diethyl carbonate (DEC), dipropyl carbonate (DPC), methylpropyl carbonate (MPC), ethylpropyl carbonate (EPC), ethyl methyl carbonate (EMC), ethylene carbonate (EC), propylene carbonate (PC), butylene carbonate (BC), methyl propyl carbonate (MC), and combinations thereof. Some non-limiting examples of the ester-based solvent include methyl acetate, methyl propanoate, ethyl acetate, n-propyl acetate, dimethylacetate, methyl propionate, ethyl propionate, and combinations thereof. Some non-limiting examples of the cthcr-bascd solvent include dibutyl ether, tctraglymc, diglymc, dimcthoxycthanc, 2-methyltetrahydrofuran, tetrahydrofuran and combinations thereof. Some non-limiting examples of the other aprotic solvent include methyl bromide, ethyl bromide, methyl formate, acetonitrile, dimethyl sulfoxide, dimethylformamide, N-methyl-2-pyrrolidone and combinations thereof. The non-aqueous organic solvent may be used singularly or in a mixture. When the organic solvent is used in a mixture, its mixture ratio can be controlled in accordance with desirable performance of a battery.

According to the present invention, the electrolyte composition comprises an electrolyte and a lithium salt dissolved therein. The lithium salt is dissolved in the non-aqueous organic solvent and supplies lithium ions in a rechargeable lithium battery. The electrolyte may comprise at least one lithium salt selected from the group consisting of LiPF₆, LiBF₄, LiSbF₆, LiAsF₆, LiClO₄, LiCl, LiI, LiB(C₂O₄)₂, LiSO₃CF₃, LiN(SO₂CF₃)₂, LiN(SO₂CF₂CF₃)₂, LiC₄F₉SO₃, or combinations thereof. The lithium salt may be used in a concentration of about 0.1 M to about 2.0 M. More severe temperature conditions, for example -30 °C, can be managed by the electrolyte composition due to freezing point depression caused by lithium salt in the electrolyte.

According to the present invention, the electrolyte composition further comprises one or more of the following additives: vinylene carbonate, diethylstilbestrol, butanesultone, and dimethyl sulfide. . In some embodiments, the total amount of the additives is from about 0.1% to about 10%, from about 0.1% to about 8%, from about 0.1% to about 6%, from about 0.1% to about 5%, from about 0.1% to about 4%, from about 0.1% to about 3%, from about 0.1% to about 2%, from about 0.1% to about 1%, from about 0.5% to about 5%, from about 0.5% to about 3%, from about 1% to about 5%, or from about 1% to about 3% by weight, based on the total weight of the electrolyte. In certain embodiments, the total amount of the additives is less than 5%, less than 4%, less than 3%, less than 2%, or less than 1% by weight, based on the total weight of the electrolyte. In some embodiments, the total amount of the additives is more than 0.5%, more than 1%, more than 2%, more than 3%, or more than 4% by weight, based on the total weight of the electrolyte. The one or more additives can be used for protecting an electrode surface under conditions of high current operation by forming protection layers on the electrode surface to increase the stability of LMO cathode material and thereby suppressing the dissolution of Mn ion into electrolyte.

The battery module comprises a plurality of lithium-ion battery cells electrically connected to each other. Connection of the lithium-ion battery cells is not particularly restricted so long as the lithium-ion battery cells are connected to have a structure that is capable of providing a high output, a large capacity and a high voltage. The lithium-ion battery cells may be connected in parallel, in series, or in parallel and series to each other depending on voltage and storage capacity requirements. In some embodiments, the lithium-ion battery cells are connected in a series configuration. In other embodiments, the lithium-ion battery cells are connected in a parallel configuration. In still other embodiments, the lithium-ion battery cells are connected in a series-parallel configuration.

A load can require both voltage and current more than that of an individual lithium-ion battery cell. For achieving the required load voltage and current, the desired numbers of lithium-ion battery cells can be combined in a series-parallel configuration. The number of the lithium-ion battery cells is not particularly restricted. For example, the number of the lithium-ion battery cells may be 2 to 20.

The number of cells which are connected in series is determined by the voltage requirement of the loads. In some embodiments, the battery module comprises 3-40 lithium-ion battery cells connected in series with each other. In certain embodiments, the number of cells connected in series is 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40 or more. In certain embodiments, the open circuit voltage of the battery module in fully charged state is about 12 V, about 24 V, about 36 V, about 48 V, about 60 V, about 72 V, about 80 V, or about 96 V.

The number of cells which are connected in parallel is determined by the continuous rate of discharge and by the total ampere hours required for a given continuous period of operation. In some embodiments, the battery module comprises 2-10 lithium-ion battery cells connected in parallel with each other. In certain embodiments, the number of cells connected in parallel is 2, 3, 4, 5, 6, 7, 8, 9, 10, or more.

A voltage regulating device is coupled to each lithium-ion battery cell for regulating the charging and/or discharging voltage of each lithium-ion battery cell in a predefined voltage level. In certain embodiments, the voltage regulating device is also enclosed in the outer housing. In some embodiments, the plurality of interconnected lithium-ion battery cells has a nominal operation voltage of about 12 V, about 24 V, about 36 V, about 48 V, about 60 V, about 72 V, about 80 V, or about 96 V.

The operating current of the voltage regulating device ranges from 200 A to 600 A. In some embodiments, operating current of the voltage regulating device is higher than 200 A, higher than 300A, higher than 400A, higher than 500 A, higher than 600A, or higher than 1,000 A.

In some embodiments, the plurality of interconnected lithium-ion battery cells comprises a safety module comprising a temperature sensor connected to each lithium-ion battery cell. The safety module monitors the temperature of each lithium-ion battery cell. When the monitored temperature of a lithium-ion battery cell reaches a threshold temperature, say 80 °C, the battery protection circuit will prevent current flow to or from the battery, with the goal of preventing the battery module from overheating.

The plurality of interconnected lithium-ion battery cells comprises a negative electrical terminal comprising a first portion in electrical contact with the at least one anode of the plurality of interconnected lithium-ion battery cells and a second portion extending beyond the periphery of the outer housing, and a positive electrical terminal comprising a first portion in electrical contact with the at least one cathode of the plurality of interconnected lithium-ion battery cells and a second portion extending beyond the periphery of the outer housing. It would be advantageous that the negative and positive electrical terminals can withstand high current loads and ensure reliable contacts between terminals of the battery module and an external circuit. That is, in order to obtain such a terminal that can withstand high current, materials with low resistivity and higher conductivity are preferred. Suitable materials for this purpose include copper, brass, aluminum, stainless steel, alloys thereof, or other similar highly conductive, low resistance materials.

Generally, the electrical terminal is of cylindrical shape and has a flat top. The cylindrical wall of the terminal has sufficient circumference and depth to contain a battery clamp. In some embodiments, the terminals have a screw thread for interconnection fixing. In certain embodiments, the electrical terminal has a cross-sectional area greater than or equal to 1 cm², greater than or equal to 2 cm², greater than or equal to 3 cm², greater than or equal to 4 cm², greater than or equal to 5 cm², greater than or equal to 6 cm², or greater than or equal to 7.5 cm², or greater than or equal to 9 cm². In other embodiments, the electrical terminal has a polygonal cross section having four or more sides, for example a rectangular, pentagonal, hexagonal or octagonal shape.

So far, there have been limited efforts to enhance the low-temperature operation of lithium-ion batteries. The battery module disclosed herein has good room temperature and low temperature discharge characteristics. In certain embodiments, the battery module is capable of discharging continuously at a rate greater than 5 C, greater than 7.5 C, greater than 10 C, greater than 12.5 C, greater than 15 C, greater than 20 C, greater than 30 C, greater than 40 C, or greater than 50 C at 25 °C.

In some embodiments, the battery module has a maximum discharging rate greater than or equal to 10 C, greater than or equal to 15 C, greater than or equal to 30 C, greater than or equal to 45 C, or greater than or equal to 50 C for a pulse discharge period of about 5 seconds at 25 °C.

When starting the engine at low temperatures, the starter draws large amounts of current from the battery module. The battery module disclosed herein is capable of discharging at high rate at low temperatures. In certain embodiments, the battery module is capable of discharging continuously at a rate greater than 2 C, greater than 4 C, greater than 6 C, greater than 8 C, greater than 10 C, greater than 15 C, or greater than 20 C at -20 °C. In some embodiments, the battery module is capable of discharging continuously at a rate greater than 1 C, greater than 2 C, or greater than 3 C at -30 °C.

In other embodiments, the battery module has a maximum discharging rate greater than 4 C, greater than 6 C, greater than 8 C, greater than 10 C, greater than 15 C, or greater than 20 C for a pulse discharge period of about 5 seconds at -20 °C. In still other embodiments, the battery module has a maximum discharging rate greater than 1 C, greater than 3 C, greater than 5 C, greater than 7 C, greater than 10 C, greater than 15 C, or greater than 20 C for a pulse discharge period of about 5 seconds at -30 °C.

In some embodiments, the battery module has a maximum charging rate greater than 2 C, greater than 3 C, greater than 4 C, greater than 5 C, greater than 10 C, greater than 15 C, or greater than 20 C at 25 °C. In certain embodiments, the battery module has a maximum charging rate greater than 1 C, greater than 2 C, greater than 3 C, greater than 4 C, greater than 5 C, greater than 10 C, greater than 15 C, or greater than 20 C at -20 °C. In some embodiments, the battery module has a maximum charging rate greater than 0.25 C, greater than 0.5 C, greater than 1 C, or greater than 2 C at -30 °C.

In certain embodiments, each lithium-ion battery cell has a capacity of not less than 5 Ah, not less than 8 Ah, not less than 10 Ah, not less than 15 Ah, or not less than 20 Ah.

The present invention is designed for long cycle life and low temperature charge/discharge applications and directed to a starting system for an internal combustion engine of outdoor power equipment, such as but not limited to a lawn tractor, snow blower or other similar type of equipment.

The capacity retention of a battery module varies with storage time and storage temperature and will drop rapidly after a long period of non-use. The capacity retention of the battery module disclosed herein remains relatively constant over a long period of time. In some embodiments, the capacity retention of the battery module is not less than 80%, not less than 85%, or not less than 90% of its initial capacity after 7 months of room temperature storage.

If a battery is stored at high temperatures, the self-discharge will be accelerated. The battery module disclosed herein shows good capacity retention that maintains more than 50% of the initial capacity after 1 week storage at an elevated temperature. In some embodiments, the capacity retention of the battery module is not less than 50%, not less than 60%, or not less than 70% of its initial capacity after storage for 7 days at 55 °C.

Starting an internal combustion engine usually requires a high current and therefore a high power. In certain embodiments, the battery module disclosed herein has a volumetric power density greater than or equal to 250 W/L, greater than or equal to 350 W/L, greater than or equal to 480 W/L, or greater than or equal to 950 W/L at 25 °C.

In another aspect, provided herein is a battery module comprising: an outer housing; a plurality of interconnected lithium-ion battery cells enclosed in the outer housing; and a voltage regulating device coupled to each lithium-ion battery cell for regulating the charging and/or discharging voltage of each lithium-ion battery cell, wherein the capacity retention of the battery module is not less than 50%, not less than 60%, or not less than 70% of its initial capacity after storage for 7 days at 55 °C.

In certain embodiments, each lithium-ion battery cell has a capacity of not less than 5 Ah, not less than 8 Ah, not less than 10 Ah, or not less than 15 Ah.

In some embodiments, the capacity retention of the battery module is not less than 80%, not less than 85%, or not less than 90% of its initial capacity after 7 months of room temperature storage.

Provided herein is a battery module comprising: an outer housing; a plurality of interconnected lithium-ion battery cells enclosed in the outer housing; and a voltage regulating device coupled to each lithium-ion battery cell for regulating the charging and/or discharging voltage of each lithium-ion battery cell, wherein the battery module has a maximum discharging rate greater than or equal to 10 C, greater than or equal to 15 C, greater than or equal to 20 C, greater than or equal to 30 C, greater than or equal to 40 C, or greater than or equal to 50 C for a pulse discharge period of about 5 seconds at 25 °C.

The battery module disclosed herein can be used in start-stop applications in hybrid vehicles, where internal combustion engines switched off at idle can be restarted. The battery module disclosed herein also provides some power supply for acceleration. Furthermore, when the vehicle needs to be slowed down or stopped, regenerative braking is used to charge the battery module, thereby conserving fuel. In some embodiments, the battery module for use in start-stop applications has an operating voltage from about 12 V to about 96 V or from about 12 V to about 48 V. In certain embodiments, the battery module for start-stop applications has an operating voltage of about 12 V, about 24 V, about 36 V, about 48 V, about 60 V, about 72 V, about 84 V, or about 96 V.

The following examples are presented to exemplify embodiments of the invention but are not intended to limit the invention to the specific embodiments set forth. Unless indicated to the contrary, all parts and percentages are by weight. All numerical values are approximate. When numerical ranges are given, it should be understood that embodiments outside the stated ranges may still fall within the scope of the invention. Specific details described in each example should not be construed as necessary features of the invention.

### EXAMPLES

### Reference Example 1 (not according to the invention)

### A) Preparation of positive electrode

A positive electrode slurry was prepared by mixing 92 wt.% cathode material LMO (LiMn₂O₄ obtained from HuaGuan HengYuan LiTech Co. Ltd., Qingdao, China) having a particle size D50 of 13 µm, 4 wt.% carbon black (SuperP; obtained from Timcal Ltd, Bodio, Switzerland) as a conductive agent, and 4 wt.% polyvinylidene fluoride (PVDF; Solef® 5130, obtained from Solvay S.A., Belgium) as a binder, which were dispersed in N-methyl-2-pyrrolidone (NMP; purity of ≥99%, Sigma-Aldrich, USA) to form a slurry with a solid content of 50 wt.%. The slurry was homogenized by a planetary stirring mixer.

The homogenized slurry was coated onto both sides of an aluminum foil having a thickness of 20 µm using a transfer coater with an area density of about 40 mg/cm². The coated films on the aluminum foil were dried for 6 minutes by a 24-meter-long conveyor hot air drying oven as a sub-module of the transfer coater operated at a conveyor speed of about 4 meters/minute to obtain a positive electrode. The temperature-programmed oven allowed a controllable temperature gradient in which the temperature gradually rose from the inlet temperature of 65 °C to the outlet temperature of 80 °C. The electrode was then pressed to increase the density of the coating and the density was 2.98 g/cm³.

### B) Preparation of negative electrode

A negative electrode slurry was prepared by mixing 90 wt.% of hard carbon (HC; purity of 99.5%, obtained from Ruifute Technology Ltd., Shenzhen, Guangdong, China) with 1.5 wt.% carboxymethyl cellulose (CMC, BSH-12, DKS Co. Ltd., Japan) and 3.5 wt.% SBR (AL-2001, NIPPON A&L INC., Japan) as a binder, and 5 wt.% carbon black as a conductive agent, which were dispersed in deionized water to form another slurry with a solid content of 50 wt.%. The slurry was coated onto both sides of a copper foil having a thickness of 9 µm using a transfer coater with an area density of about 15 mg/cm². The coated films on the copper foil were dried at about 50 °C for 2.4 minutes by a 24-meter-long conveyor hot air dryer operated at a conveyor speed of about 10 meters/minute to obtain a negative electrode. The electrode was then pressed to increase the density of the coating and the density was 1.8 g/cm³.

### C) Assembling of electrode assembly

The resulting cathode film and anode film were used to prepare the cathode and anode respectively by cutting into individual electrode plates. A conductive tab made of aluminum having a width of 3 cm, a length of 2 cm, and a thickness of 0.5 mm was ultrasonically welded to the uncoated portion of the positive electrode. Similarly, a conductive tab made of nickel having the same size as the conductive tab for the positive electrode was ultrasonically welded to the uncoated portion of the negative electrode. The above positive and negative electrode plates were alternately stacked via separators. The positive electrode plates (20 sheets), the negative electrode plates (21 sheets), and the continuous separator sheet were stacked to construct an electrode assembly. The separator was a ceramic coated PET microporous membrane made of nonwoven fabric (SEPARION, Evonik Industries, Germany), which had a thickness of about 35 µm. The electrode assembly was dried in a vacuum oven inside a glove box under a pressure of 10x10³ Pa at 102 °C for 3 hours. The drying chamber was then filled with hot, dry nitrogen having a water content of 5 ppm and a temperature of 85 °C. The hot, dry nitrogen was retained in the drying chamber for 5 minutes before evacuating the drying chamber. This cycle was repeated 10 times.

### D) Assembling of pouch-type battery

Pouch cells were assembled by packaging the dried electrode assembly in a case made of an aluminum-plastic laminated film. An electrolyte was then filled into the case holding the packed electrodes in high-purity argon atmosphere with moisture and oxygen content < 1 ppm. The electrolyte was prepared by adding LiPF₆ in a solvent mixture of ethylene carbonate (EC), ethyl methyl carbonate (EMC) and dimethyl carbonate (DMC) in a volume ratio of 1:1:1 and adding vinylene carbonate (VC) as an additive, where the concentration of LiPF₆ was 1.0 M. The added amount of vinylene carbonate was 1.5% by weight, based on total weight of the electrolyte. After electrolyte filling, the pouch cells were vacuum sealed and then mechanically pressed using a punch tooling with standard square shape.

### E) Assembling of battery module

A battery module was made up of 6 pouch cells and the cells were connected in series/parallel configuration as shown in Figure 1. Three groups (1) of two parallel connected cells (2) were connected in series between a plus voltage output terminal and a minus voltage output terminal. The interconnected lithium-ion battery cells were enclosed in a plastic housing, wherein the housing had a negative and a positive terminal protruding from said housing and exposed to the external environment. The cross-sectional area of each terminal was about 1.7 cm². The nominal voltage of the battery module was 12 V.

### F) Measurements of water contents of electrode assembly

The water contents in the electrode assembly were measured by Karl-fisher titration. The electrode assembly was cut into small pieces of 1 cm x 1 cm in a glove box filled with argon gas. The cut electrode assembly having a size of 1 cm x 1 cm was weighed in a sample vial. The weighed electrode assembly was then added into a titration vessel for Karl Fischer titration using Karl Fischer coulometry moisture analyzer (831 KF Coulometer, Metrohm, Switzerland). Measurement was repeated three times to find the average value. The water content in the electrode assembly is shown in Table 4.

### Reference Example 2 (not according to the invention)

### Electrochemical measurements

### I) Nominal capacity

The lithium-ion battery cells prepared in Example 1 were tested galvanostatically at a current density of C/2 at 25 °C on a battery tester (BTS-5V20A, obtained from Neware Electronics Co. Ltd, China) between 3.0 V and 4.2 V. The average nominal capacity was about 9.6 Ah.

The battery module prepared in Example 1 was tested at a current density of C/2 at 25 °C on a battery tester (CT-4001-15V300A-NA, obtained from Neware Electronics Co. Ltd, China) between 9.0 V and 12.6 V. The nominal capacity was about 19.8 Ah.

### II) Charging capability at room temperature

The battery module was first fully charged to 12.6 V and then discharged to 9.0 V at C/2 at 25 °C. The fully discharged battery module was charged to 12.6 V at a predetermined current density and its discharging capacity was measured using a battery tester at C/2 at 25 °C. This procedure was repeated by charging the fully discharged battery module with various charging current densities until the maximum charging rate was identified. The maximum charging rate obtained was about 3.8 C.

### III) Discharging capability at room temperature

The determination of the discharging capacities of the battery module was carried out by comparing the discharging curves obtained by discharging the battery module at different current densities. The battery module was first fully discharged and then charged to 12.6 V at C/2 at 25 °C. The fully charged battery module was discharged to 9.0 V at a predetermined current density at 25 °C and its discharging capacity was measured using a battery tester. This procedure was repeated by discharging the fully charged battery module with various discharging current density until the continuous discharging rate and maximum pulse discharging rate were identified.

The continuous discharging rate of the battery module was 11.5 C. The maximum discharging rate of the battery module for a pulse discharge period of about 5 seconds was about 35 C. The volume of the battery module was about 3.5 L and the corresponding volumetric power density was about 780 W/L.

### IV) Low temperature discharging capability

The battery module was fully charged at C/2 at 25 °C. The battery module was then placed in a temperature chamber (T-HWS-150U, Tianyi Instrument and Equipment Co. Ltd., Dongguan, China) and kept at -30 °C for 24 hours. The maximum discharging rate of the battery module was measured by discharging the module at different current densities to 9.0 V at -30 °C for a pulse discharge period of about 5 seconds using a battery tester (CT-4001-15V300A-NA, obtained from Neware Electronics Co. Ltd, China). The maximum discharging rate obtained was 7 C (~138 A).

### V) Capacity fading after being stored at high temperature and room temperature

The battery module was fully charged at C/2 at 25 °C. The battery module was then placed in a temperature chamber (T-HWS-150U, Tianyi Instrument and Equipment Co. Ltd., Dongguan, China) and kept at 55 °C for 7 days. A 40% relative humidity was maintained in the chamber. Then the battery module was cooled down to about 25 °C and discharged to 9.0 V at C/2. The capacity was about 16 Ah and the capacity retention was about 81% of its initial capacity after storage for 7 days at 55 °C.

The battery module was fully charged at C/2 at 25 °C. The battery module was then placed in a temperature chamber and kept at 25 °C for 7 months. A 40% relative humidity was maintained in the chamber. Then the battery module was discharged to 9.0 V at C/2. The capacity was about 17.4 Ah and the capacity retention was about 88% of its initial capacity after storage for 7 months at 25 °C.

### Reference Example 3 (not according to the invention)

### A) Preparation of positive electrode

A positive electrode slurry was prepared by mixing 65 wt.% LiMn₂O₄ (LMO) (obtained from HuaGuan HengYuan LiTech Co. Ltd., Qingdao, China) having a particle size D50 of 17 µm and 25 wt.% LiNi_{0.33}Mn_{0.33}Co_{0.33}O₂ (NMC333) (TLM 310, obtained from Xinxiang Tianli Energy Co. Ltd., China) having a particle size D50 of 17 µm as a cathode material, 5.5 wt.% carbon black (SuperP; obtained from Timcal Ltd, Bodio, Switzerland) as a conductive agent, and 1.5 wt.% polyacrylic acid (PAA, #181285, obtained from Sigma-Aldrich, US) and 3 wt.% polyacrylonitrile (LA 132, Chengdu Indigo Power Sources Co., Ltd., China) as a binder, which were dispersed in deionized water to form a slurry with a solid content of 50 wt.%. The slurry was homogenized by a planetary stirring mixer.

The homogenized slurry was coated onto both sides of an aluminum foil having a thickness of 20 µm using a transfer coater with an area density of about 40 mg/cm². The coated films on the aluminum foil were dried for 4 minutes by a 24-meter-long conveyor hot air drying oven as a sub-module of the transfer coater operated at a conveyor speed of about 4 meters/minute to obtain a positive electrode. The temperature-programmed oven allowed a controllable temperature gradient in which the temperature gradually rose from the inlet temperature of 65 °C to the outlet temperature of 80 °C. The electrode was then pressed to increase the density of the coating and the density was 3.05

### B) Preparation of negative electrode

A negative electrode was prepared by the method described in Example 1 except that natural graphite was used as the anode material instead of hard carbon, the coated films on the copper foil was dried for 2.6 minutes instead of 2.4 minutes, and the density of the coating of the electrode was 1.9 g/cm³ instead of 1.8

### C) Assembling of electrode assembly

The resulting cathode film and anode film were used to prepare the cathode and anode respectively by cutting into individual electrode plates. A conductive tab made of aluminum having a width of 4 cm, a length of 2 cm, and a thickness of 0.5 mm was ultrasonically welded to the uncoated portion of the positive electrode. Similarly, a conductive tab made of nickel having the same size as the conductive tab for the positive electrode was ultrasonically welded to the uncoated portion of the negative electrode. The above positive and negative electrode plates were alternately stacked via separators. The positive electrode plates (20 sheets), the negative electrode plates (21 sheets), and the continuous separator sheet were stacked to construct an electrode assembly. The separator was an uncoated nonwoven PET fabric (obtained from MITSUBISHI PAPER MILLS LTD, Japan), which had a thickness of about 20 µm. The electrode assembly was dried in a vacuum oven inside a glove box under a pressure of 10x10³ Pa at 100 °C for 3 hours. The drying chamber was then filled with hot, dry nitrogen having a water content of 5 ppm and a temperature of 85 °C. The hot, dry nitrogen was retained in the drying chamber for 5 minutes before evacuating the drying chamber. This cycle was repeated 10 times.

### D) Assembling of pouch-type battery

Pouch cells were assembled by the method described in Example 1 except that 0.5 wt.% of diethylstilbestrol (DES) was used as the electrolyte additive instead of 1.5 wt.% of VC.

### E) Assembling of battery module

A battery module was made up of 7 pouch cells connected in series. The interconnected lithium-ion battery cells were enclosed in a plastic housing, wherein the housing had a negative and a positive terminal protruding from said housing and exposed to the external environment. The cross-sectional area of each terminal was about 1.2 cm². The nominal voltage of the battery module was 24 V.

### Reference Example 4 (not according to the invention)

### Electrochemical measurements

### I) Nominal capacity

The average nominal capacity of the lithium-ion battery cells prepared in Example 3 were tested by the method described in Example 2. The average nominal capacity was about 10.8 Ah.

The battery module prepared in Example 3 was tested at current density of C/2 at 25 °C on a battery tester (CT-4001-30V200A-NA, obtained from Neware Electronics Co. Ltd, China) between 21 V and 29.4 V. The nominal capacity was about 10.8 Ah.

### II) Charging capability at room temperature

The charging capability of the battery module was tested by the method described in Example 2 except that the battery module was first fully charged to 29.4 V and then discharged to 21 V instead of being fully charged to 12.6 V followed by discharging to 9 V. The maximum charging rate obtained was about 4.5 C.

### III) Discharging capability at room temperature

The discharging capability of the battery module was tested by the method described in Example 2 except that the battery module was first fully discharged to 21 V and then charged to 29.4 V instead of being fully discharged to 9 V followed by charging to 12.6 V.

The continuous discharging rate of the battery module was 13.7 C. The maximum discharging rate of the battery module for a pulse discharge period of about 5 seconds was about 28.5 C. The volume of the battery module was about 3.5 L and the corresponding volumetric power density was about 1,015 W/L.

### IV) Low temperature discharging capability

The low temperature discharging capability of the battery module was tested by the method described in Example 2 except that the maximum discharging rate of the battery module was measured by discharging the module at different current densities to 21 V instead of 9 V. The maximum discharging rate obtained was 5.4 C (~58.3 A).

### V) Capacity fading after being stored at high temperature and room temperature

The capacity retention of the battery module after being stored at high temperature and room temperature were tested by the method described in Example 2 except that the fully charged battery module was discharged to 21 V instead of 9 V after storage.

The capacity was about 7.35 Ah and the capacity retention was about 68% of its initial capacity after storage for 7 days at 55 °C. The capacity was about 10.4 Ah and the capacity retention was about 96% of its initial capacity after storage for 7 months at 25 °C.

### Reference Example 5 (not according to the invention)

### A) Preparation of cathode material

A particulate cathode material Mg-doped spinel lithium manganese oxide was prepared by mixing powdery LiMn₂O₄ (LMO) (obtained from HuaGuan HengYuan LiTech Co. Ltd., Qingdao, China), Li₂CO₃ (obtained from Tianqi Lithium, Shenzhen, China) and MgO (>99%, obtained from Sigma-Aldrich, US), and calcining the obtained mixture for 18 hours at 900 °C. The mixing ratio of the LiMn₂O₄, Li₂CO₃ and MgO may vary according to the desired amount of doping. The calcinated product was crushed by a jet mill (LNJ-6A, obtained from Mianyang Liuneng Powder Equipment Co., Ltd., Sichuan, China) for about 1 hour, followed by passing the crushed product through a 270-mesh sieve to obtain a cathode material doped with about 2.5 wt.% Mg. The cathode material obtained has a particle size D50 of about 40 µm.

### B) Preparation of positive electrode

A positive electrode slurry was prepared by mixing 88 wt.% Mg-doped LiMn₂O₄ as a cathode material, 6 wt.% carbon black (SuperP; obtained from Timcal Ltd, Bodio, Switzerland) as a conductive agent, and 3 wt.% polyacrylic acid (PAA, #181285, obtained from Sigma-Aldrich, US) and 3 wt.% polyacrylonitrile (LA 132, Chengdu Indigo Power Sources Co., Ltd., China) as a binder, which were dispersed in deionized water to form a slurry with a solid content of 50 wt.%. The slurry was homogenized by a planetary stirring mixer.

The homogenized slurry was coated onto both sides of an aluminum foil having a thickness of 20 µm using a transfer coater with an area density of about 40 mg/cm². The coated films on the aluminum foil were dried for 4 minutes by a 24-meter-long conveyor hot air drying oven as a sub-module of the transfer coater operated at a conveyor speed of about 4.5 meters/minute to obtain a positive electrode. The temperature-programmed oven allowed a controllable temperature gradient in which the temperature gradually rose from the inlet temperature of 65 °C to the outlet temperature of 80 °C. The electrode was then pressed to increase the density of the coating and the density was 3.15

### C) Preparation of negative electrode

Negative electrodes were prepared by the method described in Example 1.

### D) Assembling of electrode assembly

The resulting cathode film and anode film were used to prepare the cathode and anode respectively by cutting into individual electrode plates. A conductive tab made of aluminum having a width of 4.5 cm, a length of 2 cm, and a thickness of 0.5 mm was ultrasonically welded to the uncoated portion of the positive electrode. Similarly, a conductive tab made of nickel having the same size as the conductive tab for the positive electrode was ultrasonically welded to the uncoated portion of the negative electrode. The above positive and negative electrode plates were alternately stacked via separators. The positive electrode plates (28 sheets), the negative electrode plates (29 sheets), and the continuous separator sheet were stacked to construct an electrode assembly. The separator was a ceramic coated PET microporous separator (obtained from MITSUBISHI PAPER MILLS LTD, Japan), which had a thickness of about 30 µm. The electrode assembly was dried in a vacuum oven inside a glove box under a pressure of 10x10³ Pa at 100 °C for 3 hours. The drying chamber was then filled with hot, dry nitrogen having a water content of 5 ppm and a temperature of 85 °C. The hot, dry nitrogen was retained in the drying chamber for 5 minutes before evacuating the drying chamber. This cycle was repeated 10 times.

### E) Assembling of pouch-type battery

Pouch cells were assembled by the method described in Example 1 except that 0.5 wt.% of DES and 1.5 wt.% of VC were used as the electrolyte additive instead of 1.5 wt.% of VC.

### F) Assembling of battery module

A battery module was made up of 3 pouch cells connected in series. The interconnected lithium-ion battery cells were enclosed in a plastic housing, wherein the housing had a negative and a positive terminal protruding from said housing and exposed to the external environment. The cross-sectional area of each terminal was about 1.8 cm². The nominal voltage of the battery module was 12 V.

### Reference Example 6 (not according to the invention)

### Electrochemical measurements

### I) Nominal capacity

The lithium-ion battery cells and battery module prepared in Example 5 were tested by the method described in Example 2. The average nominal capacity of the lithium-ion battery cells and battery module were about 12.5 Ah.

### II) Charging capability at room temperature

The charging capability of the battery module was tested by the method described in Example 2. The maximum charging rate obtained was about 5.7 C.

### III) Discharging capability at room temperature

The discharging capability of the battery module was tested by the method described in Example 2.

The continuous discharging rate of the battery module was 15.8 C. The maximum discharging rate of the battery module for a pulse discharge period of about 5 seconds was about 48.5 C. The volume of the battery module was about 2 L and the corresponding volumetric power density was about 1,185 W/L.

### IV) Low temperature discharging capability

The low temperature discharging capability of the battery module was tested by the method described in Example 2. The maximum discharging rate obtained was 9.7 C (~121.3 A).

### V) Capacity fading after being stored at high temperature and room temperature

The capacity retention of the battery module after being stored at high temperature and room temperature was tested by the method described in Example 2.

The capacity was about 11.13 Ah and the capacity retention was about 89% of its initial capacity after storage for 7 days at 55 °C. The capacity was about 11.3 Ah and the capacity retention was about 90.4% of its initial capacity after storage for 7 months at 25 °C.

### Example 7

### A) Preparation of a core-shell cathode material

The core of the core-shell cathode material was Li_{1.01}Ni_{0.53}Mn_{0.30}C_{O0.17}O₂ (NMC532) and was prepared by a co-precipitation method. The shell of the core-shell cathode material was Li_{0.97}Ni_{0.5}Mn_{0.32}CO_{0.15}Al_{0.03}O₂ and was prepared by forming a precipitate of Al(OH)₃ on the surface of the core to form a precursor, mixing the precursor with Li₂CO₃ (obtained from Tianqi Lithium, Shenzhen, China) to obtain a mixture, and calcinating the mixture at 900 °C. The calcinated product was crushed by a jet mill (LNJ-6A, obtained from Mianyang Liuneng Powder Equipment Co., Ltd., Sichuan, China) for about 1 hour, followed by passing the crushed product through a 270-mesh sieve to obtain a cathode material having a particle size D50 of about 38 µm. The content of aluminium in the core-shell cathode material gradiently decreases from the outer surface of the shell to the inner core. The thickness of the shell is about 3 µm.

### B) Preparation of positive electrode

A positive electrode slurry was prepared by mixing 88 wt.% core-shell cathode material prepared above, 6 wt.% carbon black (SuperP; obtained from Timcal Ltd, Bodio, Switzerland) as a conductive agent, and 6 wt.% polyacrylonitrile (LA 132, Chengdu Indigo Power Sources Co., Ltd., China) as a binder, which were dispersed in deionized water to form a slurry with a solid content of 50 wt.%. The slurry was homogenized by a planetary stirring mixer.

The homogenized slurry was coated onto both sides of an aluminum foil having a thickness of 20 µm using a transfer coater with an area density of about 40 mg/cm². The coated films on the aluminum foil were dried for 5.5 minutes by a 24-meter-long conveyor hot air drying oven as a sub-module of the transfer coater operated at a conveyor speed of about 4.4 meters/minute to obtain a positive electrode. The temperature-programmed oven allowed a controllable temperature gradient in which the temperature gradually rose from the inlet temperature of 70 °C to the outlet temperature of 85 °C. The electrode was then pressed to increase the density of the coating and the density was about 3 g/cm³.

### C) Preparation of negative electrode

Negative electrodes were prepared by the method described in Example 1.

### D) Assembling of electrode assembly

The resulting cathode film and anode film were used to prepare the cathode and anode respectively by cutting into individual electrode plates. A conductive tab made of aluminum having a width of 4.5 cm, a length of 2 cm, and a thickness of 0.5 mm was ultrasonically welded to the uncoated portion of the positive electrode. Similarly, a conductive tab made of nickel having the same size as the conductive tab for the positive electrode was ultrasonically welded to the uncoated portion of the negative electrode. The above positive and negative electrode plates were alternately stacked via separators. The positive electrode plates (26 sheets), the negative electrode plates (27 sheets), and the continuous separator sheet were stacked to construct an electrode assembly. The separator was a ceramic coated PET microporous separator (obtained from MITSUBISHI PAPER MILLS LTD, Japan), which had a thickness of about 30 µm. The electrode assembly was dried in a vacuum oven inside a glove box under a pressure of 9x10³ Pa at 100 °C for 6 hours. The drying chamber was then filled with hot, dry nitrogen having a water content of 5 ppm and a temperature of 85 °C. The hot, dry nitrogen was retained in the drying chamber for 5 minutes before evacuating the drying chamber. This cycle was repeated 10 times.

### E) Assembling of pouch-type battery

Pouch cells were assembled by the method described in Example 5.

### F) Assembling of battery module

A battery module was made up of 3 pouch cells connected in series. The interconnected lithium-ion battery cells were enclosed in a plastic housing, wherein the housing had a negative and a positive terminal protruding from said housing and exposed to the external environment. The cross-sectional area of each terminal was about 2.4 cm². The nominal voltage of the battery module was 12 V.

### Example 8

### Electrochemical measurements

### I) Nominal capacity

The lithium-ion battery cells and battery module prepared in Example 7 were tested by the method described in Example 2. The average nominal capacity of the lithium-ion battery cells and battery module were about 11.5 Ah.

### II) Charging capability at room temperature

The charging module of the battery module was tested by the method described in Example 2. The maximum charging rate obtained was about 5.1 C.

### III) Discharging capability at room temperature

The discharging capability of the battery module was tested by the method described in Example 2.

The continuous discharging rate of the battery module was 13 C. The maximum discharging rate of the battery module for a pulse discharge period of about 5 seconds was about 51.3 C. The volume of the battery module was about 2 L and the corresponding volumetric power density was about 945 W/L.

### IV) Low temperature discharging capability

The low temperature discharging capability of the battery module was tested by the method described in Example 2. The maximum discharging rate obtained was 8.2 C (~94.4 A).

### V) Capacity fading after being stored at high temperature and room temperature

The capacity retention of the battery module after being stored at high temperature and room temperature was tested by the method described in Example 2.

The capacity was about 8.21 Ah and the capacity retention was about 83% of its initial capacity after storage for 7 days at 55 °C. The capacity was about 10.4 Ah and the capacity retention was about 90.4% of its initial capacity after storage for 7 months at 25 °C.

### Reference Example 9 (not according to the invention)

A positive electrode slurry was prepared by mixing 91 wt.% LiMn₂O₄ (LMO) having a particle size of 35 µm as a cathode material, 5 wt.% carbon black (SuperP; obtained from Timcal Ltd, Bodio, Switzerland) as a conductive agent, and 4 wt.% polyacrylonitrile (LA 132, Chengdu Indigo Power Sources Co., Ltd., China) as a binder, which were dispersed in deionized water to form a slurry with a solid content of 50 wt.%. The slurry was homogenized by a planetary stirring mixer.

A positive electrode was prepared by coating and drying the slurry according to the method described in Example 1.

### Reference Example 10 (not according to the invention)

### A) Preparation of cathode material

A particulate cathode material Co-doped spinel lithium manganese oxide was prepared by mixing powdery LiMn₂O₄ (LMO) (obtained from HuaGuan HengYuan LiTech Co. Ltd., Qingdao, China), Li₂CO₃ (obtained from Tianqi Lithium, Shenzhen, China) and CoO₂ (>99%, obtained from Sigma-Aldrich, US), and calcining the obtained mixture for 3.5 hours at 750 °C. The mixing ratio of the LiMn₂O₄, Li₂CO₃ and CoO₂ may vary according to the desired amount of doping. The calcinated product was crushed by a jet mill (LNJ-6A, obtained from Mianyang Liuneng Powder Equipment Co., Ltd., Sichuan, China) for about 1 hour, followed by passing the crushed product through a 270-mesh sieve to obtain a cathode material doped with about 2 wt.% Co. The cathode material obtained had a particle size D50 of about 31 µm.

### B) Preparation of positive electrode

A positive electrode was prepared by the method described in Example 9 except the cathode material of Example 10 was used instead of LMO of Example 9.

### Reference Example 11 (not according to the invention)

### A) Preparation of cathode material

A particulate cathode material Al-doped spinel lithium manganese oxide was prepared by mixing powdery LiMn₂O₄ (LMO) (obtained from HuaGuan HengYuan LiTech Co. Ltd., Qingdao, China), Li₂CO₃ (obtained from Tianqi Lithium, Shenzhen, China) and Al₂O₃ (>99%, obtained from Sigma-Aldrich, US), and calcining the obtained mixture for 3 hours at 850 °C. The mixing ratio of the LiMn₂O₄, Li₂CO₃ and Al₂O₃ may vary according to the desired amount of doping. The calcinated product was crushed by a jet mill (LNJ-6A, obtained from Mianyang Liuneng Powder Equipment Co., Ltd., Sichuan, China) for about 1.5 hours, followed by passing the crushed product through a 270-mesh sieve to obtain a cathode material doped with about 2.5 wt.% Al. The cathode material obtained had a particle size D50 of about 27 µm.

### B) Preparation of positive electrode

A positive electrode was prepared by the method described in Example 9 except that the cathode material of Example 11 was used instead of LMO of Example 9.

### Reference Example 12 (not according to the invention)

### A) Preparation of cathode material

The core of the core-shell cathode material was LiMn₂O₄ and was prepared by a co-precipitation method. The shell of the core-shell cathode material was Al₂O₃ and was prepared by forming a precipitate of Al(OH)₃ on the surface of the core to form a precursor, mixing the precursor with Li₂CO₃ (obtained from Tianqi Lithium, Shenzhen, China) to obtain a mixture, and calcinating the mixture at 850 °C. The calcinated product was crushed by a jet mill (LNJ-6A, obtained from Mianyang Liuneng Powder Equipment Co., Ltd., Sichuan, China) for about 1 hour, followed by passing the crushed product through a 270-mesh sieve to obtain a cathode material having a particle size D50 of about 40 µm. The content of aluminium in the core-shell cathode material gradiently decreases from the outer surface of the shell to the inner core. The thickness of the shell was about 2 µm.

### B) Preparation of positive electrode

A positive electrode was prepared by the method described in Example 9 except that the cathode material of Example 12 was used instead of LMO of Example 9.

### Reference Example 13 (not according to the invention)

### A) Preparation of cathode material

A core-shell cathode material was prepared by the method described in Example 12 except that a 2.5 wt.% Mg-doped LMO having a particle size D50 of 40 µm was used instead of LMO of Example 12.

### B) Preparation of positive electrode

A positive electrode was prepared by the method described in Example 9 except that the cathode material of Example 13 was used instead of LMO of Example 9.

### Reference Example 14 (not according to the invention)

### A) Preparation of negative electrode

A negative electrode was prepared by the method described in Example 1 except that LTO was used as the anode material instead of hard carbon.

### B) Preparation of positive electrode

A positive electrode was prepared by the method described in Example 9.

### Preparation of negative electrodes of Examples 9-13

Negative electrodes were prepared by the method described in Example 1.

### Assembling of electrode assemblies of Examples 9-14

Electrode assemblies were prepared by the method described in Example 3.

### Assembling of pouch-type batteries of Examples 9-14

Pouch-type batteries were prepared by the method described in Example 5.

### Assembling of battery modules of Examples 9-14

Battery modules were prepared by the method described in Example 1.

### Measurements of water contents of electrode assemblies of Examples 2-14

The water contents of electrode assemblies were measured by the method described in Example 1.

### Comparative Example 1

### A) Preparation of positive electrode

A positive electrode was prepared by the method described in Example 5 except that LMO doped with 6 wt.% of Mg was used as the cathode material instead of LMO doped with 2.5 wt.% of Mg.

### B) Assembling of electrode assembly and battery module

Electrode assembly and battery module were prepared by the method described in Example 5.

### Comparative Example 2

A positive electrode was prepared by the method described in Example 12 except that the thickness of the shell of the core-shell cathode material was 0.4 µm instead of 2 µm.

### Comparative Example 3

A positive electrode was prepared by the method described in Example 12 except that the thickness of the shell of the core-shell cathode material was 5.5 µm instead of 2 µm.

### Comparative Example 4

A positive electrode was prepared by the method described in Example 9 except that different weight percentages of electrode materials described in Table 1 below were used.

### Comparative Example 5

An electrode assembly was prepared by the method described in Example 9 except that different drying conditions described in Table 3 below were used.

### Comparative Example 6

A pouch-type battery was prepared by the method described in Example 9 except that 2 wt.% of DES and 4 wt.% of VC were used as the electrolyte additive instead of 0.5 wt.% of DES and 1.5 wt.% of VC.

### Comparative Example 7

An electrode assembly was prepared by the method described in Example 9 except that the width of conductive tab for both positive electrode and negative electrode were 1.5 cm instead of 4 cm.

### Preparation of positive electrodes of Comparative Examples 5-7

Positive electrodes were prepared by the method described in Example 9.

### Preparation of negative electrodes of Comparative Examples 1-7

Negative electrodes were prepared by the method described in Example 1.

### Assembling of electrode assemblies of Comparative Examples 2-4 and 6

Electrode assemblies were prepared by the method described in Example 3.

### Assembling of pouch-type batteries of Comparative Examples 1-5 and 7

Pouch-type batteries were prepared by the method described in Example 5.

### Assembling of battery modules of Comparative Examples 2-7

Battery modules were prepared by the method described in Example 1.

### Measurements of water contents of electrode assemblies of Comparative Examples 1-7

The water contents of electrode assemblies were measured by the method described in Example 1.

### Electrochemical measurement of lithium-ion battery cells of Examples 9-14 and Comparative Examples 1-7

The average nominal capacities of the lithium-ion battery cells were measured by the method described in Example 1.

### Electrochemical measurements of battery modules of Examples 9-14 and Comparative Examples 1-7

Electrochemical performance of the battery modules was measured by the method described in Example 1.

The formulations of cathode electrode layers and anode electrode layers of Examples 1-14 and Comparative Examples 1-7 are shown in Tables 1 and 2 below respectively. The drying conditions of electrode assemblies of Examples 1-14 and Comparative Examples 1-7 are shown in Table 3 below. The parameters of the electrode assemblies, compositions of electrolyte additive and capacities of lithium-ion battery cells of Examples 1-14 and Comparative Examples 1-7 are shown in Table 4 below. The battery connection configurations and electrochemical measurements of the battery modules of Examples 1-14 and Comparative Examples 1-7 are shown in Table 5 below.

The battery module of Examples 1-14 shows significantly enhanced discharge characteristics at -30 °C and demonstrates sufficient power for starting an engine of the outdoor power equipment after low temperature storage. In addition, the rate capability and cyclability of the battery module at room temperature are not sacrificed.

The battery module of Examples 1-14 demonstrates sufficient power for starting an engine of the outdoor power equipment after high temperature storage and a long period of non-use.

Examples 1-6 & 9-14 are not according to the invention, they are given for reference only.

**Table 1**

| | Components of cathode electrode layer | | | | | | | | | | |
|---|---|---|---|---|---|---|---|---|---|---|---|
| | Cathode material | | | | | | Conductive agent | Binder material | Wt.% of electrode material | | |
| | | D50 (µm) | Dopant | Wt.% of dopant | Shell of core-shell cathode material | Thickness of shell (µm) | | | Cathode material | Conductive agent | Binder material |
| Example 1 | LMO | 13 | / | / | / | / | Carbon black | PVDF | 92 | 4 | 4 |
| Example 3 | LMO+NMC333 | 17 | / | / | / | / | Carbon black | PAA+LA132 | 90 | 5.5 | 4.5 |
| Example 5 | LMO | 40 | Mg | 2.5 | / | / | Carbon black | PAA+LA132 | 88 | 6 | 6 |
| Example 7 | NMC532 | 38 | / | / | Li_{0.97}Ni_{0.5}Mn_{0.32} C0_{0.15}Al_{0.03}O₂ | 3 | Carbon black | LA132 | 88 | 6 | 6 |
| Example 9 | LMO | 35 | / | / | / | / | Carbon black | LA132 | 91 | 5 | 4 |
| Example 10 | LMO | 31 | Co | 2 | / | / | Carbon black | LA132 | 91 | 5 | 4 |
| Example 11 | LMO | 27 | A1 | 2.5 | / | / | Carbon black | LA132 | 91 | 5 | 4 |
| Example 12 | LMO | 40 | / | / | Al₂O₃ | 2 | Carbon black | LA132 | 91 | 5 | 4 |
| Example 13 | LMO | 40 | Mg | 2.5 | Al₂O₃ | 2 | Carbon black | LA132 | 91 | 5 | 4 |
| Example 14 | LMO | 35 | / | / | / | / | Carbon black | LA132 | 91 | 5 | 4 |
| Comparative Example 1 | LMO | 40 | Mg | 6 | / | / | Carbon black | PAA+LA132 | 88 | 6 | 6 |
| Comparative Example 2 | LMO | 40 | / | / | Al₂O₃ | 0.4 | Carbon black | LA132 | 91 | 5 | 4 |
| Comparative Example 3 | LMO | 40 | / | / | Al₂O₃ | 5.5 | Carbon black | LA132 | 91 | 5 | 4 |
| Comparative Example 4 | LMO | 35 | / | / | / | / | Carbon black | LA132 | 93.5 | 1.5 | 5 |
| Comparative Example 5 | LMO | 35 | / | / | / | / | Carbon black | LA132 | 91 | 5 | 4 |
| Comparative Example 6 | LMO | 35 | / | / | / | / | Carbon black | LA132 | 91 | 5 | 4 |
| Comparative Example 7 | LMO | 35 | / | / | / | / | Carbon black | LA132 | 91 | 5 | 4 |

**Table 2**

| | Components of anode electrode layer | | | | | |
|---|---|---|---|---|---|---|
| | Electrode material | | | Wt.% of electrode material | | |
| | Anode material | Conductive agent | Binder material | Anode material | Conductive agent | Binder material |
| Examples 1, 5, 7, 9-13 and Comparative Examples 1-7 | Hard carbon | Carbon black | CMC+ SBR | 90 | 5 | 5 |
| Example 3 | Natural graphite | Carbon black | CMC+ SBR | 90 | 5 | 5 |
| Example 14 | LTO | Carbon black | CMC+ SBR | 90 | 5 | 5 |

**Table 3**

| | Electrode assembly drying conditions | | | | | | |
|---|---|---|---|---|---|---|---|
| | Vacuum drying | | | Gas filling | | No. of cycle | Total time (hrs) |
| | Pressure (Pa) | Temp. (°C) | Time (hrs) | Gas temp. (°C) | Time (mins) | | |
| Example 1 | 10,000 | 102 | 3 | 85 | 5 | 10 | 30.8 |
| Examples 3, 5, 9-14, Comparative Examples 1-4, 6-7 | 10,000 | 100 | 3 | 85 | 5 | 10 | 30.8 |
| Example 7 | 9,000 | 100 | 6 | 85 | 5 | 10 | 60.8 |
| Comparative Example 5 | 1,000 | 75 | 2 | 100 | 10 | 10 | 21.7 |

**Table 4**

| | Battery cell | | | | | | |
|---|---|---|---|---|---|---|---|
| | Electrode assembly | | | | Electrolyte | | Nominal capacity (Ah) |
| | Dimensions of conductive tab | | | Water content (ppm) | Additive | Wt.% of additive | |
| | Length (cm) | Width (cm) | Thickness (mm) | | | | |
| Example 1 | 2 | 3 | 0.5 | 13 | VC | 1.5 | 9.6 |
| Example 3 | 2 | 4 | 0.5 | 15 | DES | 0.5 | 10.8 |
| Example 5 | 2 | 4.5 | 0.5 | 18 | DES+VC | 0.5+1.5 | 12.5 |
| Example 7 | 2 | 4.5 | 0.5 | 7 | DES+VC | 0.5+1.5 | 11.5 |
| Example 9 | 2 | 4 | 0.5 | 14 | DES+VC | 0.5+1.5 | 10 |
| Example 10 | 2 | 4 | 0.5 | 17 | DES+VC | 0.5+1.5 | 9.2 |
| Example 11 | 2 | 4 | 0.5 | 18 | DES+VC | 0.5+1.5 | 8.9 |
| Example 12 | 2 | 4 | 0.5 | 14 | DES+VC | 0.5+1.5 | 10 |
| Example 13 | 2 | 4 | 0.5 | 15 | DES+VC | 0.5+1.5 | 9.6 |
| Example 14 | 2 | 4 | 0.5 | 12 | DES+VC | 0.5+1.5 | 5.1 |
| Comparative Example 1 | 2 | 4.5 | 0.5 | 17 | DES+VC | 0.5+1.5 | 9.8 |
| Comparative Example 2 | 2 | 4 | 0.5 | 15 | DES+VC | 0.5+1.5 | 9.2 |
| Comparative Example 3 | 2 | 4 | 0.5 | 18 | DES+VC | 0.5+1.5 | 10.2 |
| Comparative Example 4 | 2 | 4 | 0.5 | 16 | DES+VC | 0.5+1.5 | 9.2 |
| Comparative Example 5 | 2 | 4 | 0.5 | 102 | DES+VC | 0.5+1.5 | 9.1 |
| Comparative Example 6 | 2 | 4 | 0.5 | 16 | DES+VC | 2+4 | 10.4 |
| Comparative Example 7 | 2 | 1.5 | 0.5 | 17 | DES+VC | 0.5+1.5 | 9.7 |

**Table 5**

| | Battery module | | | | | | | | | | |
|---|---|---|---|---|---|---|---|---|---|---|---|
| | Battery connection configuration | Nominal voltage (V) | Electrochemical measurement | | | | | | | | |
| | | | Testing voltage (V) | At room temp. | | | | At low temp. | [2]/[1] × 100 (%) | Capacity retention (%) after storage | |
| | | | | Nominal capacity (Ah) | Max. charging rate (C) | Max. discharging rate (C) [1] | Continuous discharging rate (C) | Max. discharging rate (C) [2] | | At high temp. for 7 days | At room temp. for 7 months |
| Examples 1-2 | Fig. 1 | 12 | 9-12.6 | 19.8 | 3.8 | 35 | 11.5 | 7 | 20 | 81 | 88 |
| Examples 3-4 | 7 batteries in series | 24 | 21-29.4 | 10.8 | 4.5 | 28.5 | 13.7 | 5.4 | 18.9 | 68 | 96 |
| Examples 5-6 | 3 batteries in series | 12 | 9-12.6 | 12.5 | 5.7 | 48.5 | 15.8 | 9.7 | 20 | 89 | 90.4 |
| Examples 7-8 | 3 batteries in series | 12 | 9-12.6 | 11.5 | 5.1 | 51.3 | 13 | 8.2 | 16 | 83 | 90.4 |
| Example 9 | Fig. 1 | 12 | 9-12.6 | 20 | 5.2 | 39 | 9.7 | 6.8 | 17.4 | 82 | 87 |
| Example 10 | Fig. 1 | 12 | 9-12.6 | 18.4 | 6.5 | 41 | 11.5 | 8.8 | 21.5 | 91 | 86 |
| Example 11 | Fig. 1 | 12 | 9-12.6 | 17.8 | 6.1 | 37 | 12.3 | 8.1 | 21.9 | 90 | 86 |
| Example 12 | Fig. 1 | 12 | 9-12.6 | 20 | 4.4 | 25 | 8.9 | 5.25 | 21.0 | 90 | 90 |
| Example 13 | Fig. 1 | 12 | 9-12.6 | 19.2 | 4.6 | 27 | 7.8 | 7.3 | 27.1 | 95 | 89 |
| Example 14 | Fig. 1 | 12 | 9-12.6 | 10.2 | 11.2 | 72 | 49 | 38.4 | 53.3 | 73.5 | 87 |
| Comparative Example 1 | 3 batteries in series | 12 | 9-12.6 | 9.8 | 3.2 | 43.5 | 7.7 | 3.3 | 7.6 | 51 | 64 |
| Comparative Example 2 | Fig.1 | 12 | 9-12.6 | 18 . 4 | 4.5 | 36 | 8.1 | 3.7 | 10.3 | 62.5 | 71 |
| Comparative Example 3 | Fig.1 | 12 | 9-12.6 | 20.4 | 2.7 | 19.2 | 5.9 | 1.4 | 7.3 | 92 | 89 |
| Comparative Example 4 | Fig.1 | 12 | 9-12.6 | 18.4 | 3 | 13.9 | 4.7 | 0.9 | 6.5 | 80 | 79 |
| Comparative Example 5 | FIg. .1 | 12 | 9-12.6 | 18.2 | 3.3 | 26.4 | 7.7 | 2.9 | 11.0 | 37 | 49 |
| Comparative Example 6 | FIg. .1 | 12 | 9-12.6 | 20.8 | 4.9 | 33 | 8.4 | 2.7 | 8.2 | 61 | 74.3 |
| Comparative Example 7 | FIg. .1 | 12 | 9-12.6 | 19.4 | 2.7 | 12.5 | 3.5 | 0.76 | 6.1 | 87 | 83 |

## Claims

1. A battery module comprising:
an outer housing;
a plurality of interconnected lithium-ion battery cells enclosed in the outer housing; and
a voltage regulating device coupled to each lithium-ion battery cell for regulating the charging and/or discharging voltage of each lithium-ion battery cell;
wherein each of the lithium-ion battery cells independently comprises a cathode, an anode, a separator interposed between the cathode and anode, and an electrolyte; wherein the cathode comprises a cathode current collector and a cathode electrode layer comprising a cathode material, a binder material and a conductive agent, and the anode comprises an anode current collector and an anode electrode layer comprising an anode material, a binder material and a conductive agent;
wherein the cathode material comprises or is a core-shell composite having a core and shell structure, wherein the core comprises a lithium transition metal oxide selected from the group consisting of LiMn₂O₄, LiNi_{0.3}Mn_{0.3}Co_{0.3}O₂, LiNi_{0.4}Mn_{0.4}Co_{0.2}O₂, LiNi_{0.5}Mn_{0.3}Co_{0.2}O₂, LiNi_{0.6}Mn_{0.2}Co_{0.2}O₂, LiNi_{0.8}Mn_{0.1}Co_{0.1}O₂, LiNi_{0.8}Co_{0.15}Al_{0.05}O₂, and combinations thereof; and wherein the shell comprises a lithium transition metal oxide selected from the group consisting of LiCoO₂, LiNiO₂, LiNi_{0.3}Mn_{0.3}Co_{0.3}O₂, LiNi_{0.4}Mn_{0.4}Co_{0.2}O₂, LiNi_{0.5}Mn_{0.3}CO_{0.2}O₂, LiNi_{0.6}Mn_{0.2}CO_{0.2}O₂, LiNi_{0.8}Mn_{0.1}Co_{0.1}O₂, LiNi_{0.8}Co_{0.15}Al_{0.05}O₂, LiMnO₂, LiMn₂O₄, and combinations thereof;
wherein the lithium transition metal oxides in the core and shell are different;
wherein the electrolyte comprises a non-aqueous organic solvent, a lithium salt, and an additive selected from the group consisting of diethylstilbestrol, butanesultone, vinylene carbonate, dimethyl sulfide, and combinations thereof; and
wherein the amount of the additive is from 0.1% to 2% by weight, based on the total weight of the electrolyte.

2. The battery module of claim 1, wherein the diameter of the core is from 5 µm to 45 µm and the thickness of the shell is from 0.1 µm to 5 µm.

3. The battery module of claim 1, wherein the lithium transition metal oxide in the core is doped with a doping element selected from the group consisting of Fe, Ni, Mn, Al, Mg, Zn, Ti, La, Ce, Sn, Zr, Ru, Si, Ge, and combinations thereof.

4. The battery module of claim 1, wherein the lithium transition metal oxide in the shell is doped with a doping element selected from the group consisting of Fe, Ni, Mn, Al, Mg, Zn, Ti, La, Ce, Sn, Zr, Ru, Si, Ge, and combinations thereof, and wherein the doping element is present in an amount less than 2% by weight, based on the total weight of the cathode electrode layer.

5. The battery module of claim 4, wherein the doping element is Al.

6. The battery module of claim 1, wherein the ratio of the diameter of the core to the thickness of the shell is from 5 to 25.

7. The battery module of claim 1, wherein each of the core and shell independently comprises two or more lithium transition metal oxides,.

8. The battery module of claim 7, wherein the two or more lithium transition metal oxides are not uniformly distributed over the core.

9. The battery module of claim 1, wherein the particle size D50 of the cathode material is from 10 µm to 50 µm.

10. The battery module of claim 1, wherein the conductive agent of the cathode electrode layer comprises carbon nanotube and graphene.

11. The battery module of claim 1, wherein the amount of each of the cathode and anode materials is independently between 80% and 95% by weight, based on the total weight of the cathode electrode layer or anode electrode layer, and wherein the amount of each of the conductive agents and binder materials in the cathode and anode electrode layers is independently from 3% to 10% by weight, based on the total weight of the cathode electrode layer or anode electrode layer, and wherein the density of each of the cathode and anode electrode layer is independently from 1.0 g/cm³ to 6.5 g/cm³.

12. The battery module of claim 1, wherein the particle size D10 of the cathode material is from 3 µm to 20 µm, and the particle size D90 of the cathode material is from 20 µm to 80 µm.

13. The battery module of claim 1, wherein the separator has a melting point of 200 °C or higher.

14. The battery module of claim 1, wherein the separator comprises a porous base material and a protective porous layer coated on one or both surfaces of the porous base material, and wherein the protective porous layer comprises a binder material and an inorganic filler selected from the group consisting of Al₂O₃, SiO₂, TiO₂, ZrO₂, BaOₓ, ZnO, CaCO₃, TiN, AlN, and combinations thereof, wherein x is 1 or 2.

15. The battery module of claim 1, wherein each of the lithium-ion battery cells independently comprises a first conductive tab coupled to the cathode and a second conductive tab coupled to the anode, and wherein the width of each of the first and second conductive tabs is independently greater than 2 cm.

## Patentansprüche

1. Batteriemodul, umfassend:
ein äußeres Gehäuse;
eine Vielzahl miteinander verbundener Lithium-Ionen-Batteriezellen, die in dem äußeren Gehäuse eingeschlossen sind; und
eine Spannungsregelvorrichtung, die mit jeder Lithium-Ionen-Batteriezelle gekoppelt ist, um die Lade- und / oder Entladespannung jeder Lithium-Ionen-Batteriezelle zu regeln;
wobei jede der Lithium-Ionen-Batteriezellen unabhängig eine Kathode, eine Anode, eine Trennschicht, eingefügt zwischen die Kathode und Anode, und einen Elektrolyten umfasst;
wobei die Kathode einen Kathodenstromkollektor und eine Kathodenelektrodenschicht umfasst, umfassend ein Kathodenmaterial, ein Bindermaterial und ein leitfähiges Mittel, und die Anode einen Anodenstromkollektor und eine Anodenelektrodenschicht umfasst, umfassend ein Anodenmaterial, ein Bindermaterial und ein leitfähiges Mittel;
wobei das Kathodenmaterial einen Kern-Schalen-Verbundwerkstoff mit einem Kern und einer Schalenstruktur umfasst oder ist, wobei der Kern ein Lithiumübergangsmetalloxid umfasst, ausgewählt aus der Gruppe bestehend aus LiMn₂O₄, LiNi_{0,3}Mn_{0,3}Co_{0,3}O₂, LiNi_{0,4}Mn_{0,4}Co_{0,2}O₂, LiNi_{0,5}Mn_{0,3}Co_{0,2}O₂, LiNi_{0,6}Mn_{0,2}Co_{0,2}O₂, LiNi_{0,8}Mn_{0,1}Co_{0.1}O₂, LiNi_{0,8}Co_{0.15}Al_{0,05}O₂ und Kombinationen davon; und wobei die Schale ein Lithiumübergangsmetalloxid umfasst, ausgewählt aus der Gruppe bestehend aus LiCoO₂, LiNiO₂, LiNi_{0,3}Mn_{0,3}Co_{0,3}O₂, LiNi_{0,4}Mn_{0,4}Co_{0,2}O2, LiNi_{0,5}Mn_{0,3}Co_{0,2}O₂, LiNi_{0,6}Mn_{0,2}Co_{0,2}O₂, LiNi_{0,8}Mn_{0,1}Co_{0,1}O₂, LiNi_{0,8}Co_{0,15}Al_{0,05}O₂, LiMnO₂, LiMn₂O₄ und Kombinationen davon, wobei die Lithiumübergangsmetalloxide in dem Kern und der Schale unterschiedlich sind;
wobei der Elektrolyt ein nichtwässeriges organisches Lösungsmittel, ein Lithiumsalz und ein Additiv umfasst, ausgewählt aus der Gruppe bestehend aus Diethylstilbestrol, Butansulton, Vinylencarbonat, Dimethylsulfid und Kombinationen davon; und
wobei die Menge an Additiv von 0,1 bis 2 Gew.-% beträgt, basierend auf dem Gesamtgewicht des Elektrolyten.

2. Batteriemodul nach Anspruch 1, wobei der Durchmesser des Kerns von 5 µm bis 45 µm beträgt und die Dicke der Schale von 0,1 µm bis 5 µm beträgt.

3. Batteriemodul nach Anspruch 1, wobei das Lithiumübergangsmetalloxid in dem Kern dotiert ist mit einem Dotierelement ausgewählt aus der Gruppe bestehend aus Fe, Ni, Mn, Al, Mg, Zn, Ti, La, Ce, Sn, Zr, Ru, Si, Ge und Kombinationen davon.

4. Batteriemodul nach Anspruch 1, wobei das Lithiumübergangsmetalloxid in dem Kern dotiert ist mit einem Dotierelement ausgewählt aus der Gruppe bestehend aus Fe, Ni, Mn, Al, Mg, Zn, Ti, La, Ce, Sn, Zr, Ru, Si, Ge und Kombinationen davon und wobei das Dotierelement in einer Menge von weniger als 2 Gew.-% vorliegt, basierend auf dem Gesamtgewicht der Kathodenelektrodenschicht.

5. Batteriemodul nach Anspruch 4, wobei das Dotierelement Al ist.

6. Batteriemodul nach Anspruch 1, wobei das Verhältnis des Durchmessers des Kerns zu der Dicke der Schale von 5 bis 25 beträgt.

7. Batteriemodul nach Anspruch 1, wobei jeder des Kerns und der Schale unabhängig zwei oder mehrere Lithiumübergangsmetalloxide umfasst.

8. Batteriemodul nach Anspruch 7, wobei die zwei oder mehr Lithiumübergangsmetalloxide über den Kern nicht gleichmäßig verteilt sind.

9. Batteriemodul nach Anspruch 1, wobei die Partikelgröße D50 des Kathodenmaterials von 10 µm bis 50 µm beträgt.

10. Batteriemodul nach Anspruch 1, wobei das leitfähige Mittel der Kathodenelektrodenschicht Kohlenstoff-Nanoröhre und Graphen umfasst.

11. Batteriemodul nach Anspruch 1, wobei die Menge von jedem des Kathoden- und Anodenmaterials unabhängig ist zwischen 80 und 95 Gew.-%, basierend auf dem Gesamtgewicht der Kathodenelektrodenschicht oder Anodenelektrodenschicht, und wobei die Menge von jedem der leitfähigen Mittel und Bindermaterialien in den Kathoden- und Anodenelektrodenschichten unabhängig ist von 3 bis 10 Gew.-%, basierend auf dem Gesamtgewicht der Kathodenelektrodenschicht oder Anodenelektrodenschicht, und wobei die Dichte von jeder der Kathoden- und Anodenelektrodenschicht unabhängig ist von 1,0 g/cm³ bis 6,5 g/cm³.

12. Batteriemodul nach Anspruch 1, wobei die Partikelgröße D10 des Kathodenmaterials von 3 µm bis 20 µm beträgt und die Partikelgröße D90 des Kathodenmaterials von 20 µm bis 80 µm beträgt.

13. Batteriemodul nach Anspruch 1, wobei der Separator einen Schmelzpunkt von 200 °C oder höher aufweist.

14. Batteriemodul nach Anspruch 1, wobei der Separator ein poröses Grundmaterial und eine schützende poröse Schicht umfasst, aufgetragen auf einer oder beiden Flächen des porösen Grundmaterials, und wobei die schützende poröse Schicht ein Bindermaterial und einen anorganischen Füllstoff umfasst, ausgewählt aus der Gruppe bestehend aus Al₂O₃, SiO₂, TiO₂, ZrO₂, BaOₓ, ZnO, CaCO₃, TiN, AlN und Kombinationen davon, wobei x 1 oder 2 ist.

15. Batteriemodul nach Anspruch 1, wobei jede der Lithium-Ionen-Batteriezellen unabhängig einen ersten leitfähigen Streifen, der mit der Kathode gekoppelt ist, und einen zweiten leitfähigen Streifen, der mit der Anode gekoppelt ist, umfasst, und wobei die Breite von jedem des ersten und zweiten leitfähigen Streifens unabhängig größer als 2 cm ist.

## Revendications

1. Un module de batterie comprenant :
un boîtier extérieur ;
une pluralité de cellules de batterie lithium-ion interconnectées, enfermées dans le boîtier extérieur ; et
un dispositif de régulation de tension relié à chaque cellule de batterie lithium-ion pour réguler la tension de charge et / ou de décharge de chaque cellule de batterie lithium-ion ;
chacune des cellules de batterie lithium-ion comprenant indépendamment une cathode, une anode, un séparateur interposé entre la cathode et l'anode, et un électrolyte ;
la cathode comprenant un collecteur de courant de cathode et une couche d'électrode de cathode comprenant un matériau de cathode, un matériau formant liant et un agent conducteur, et l'anode comprend un collecteur de courant d'anode et une couche d'électrode d'anode comprenant un matériau d'anode, un matériau formant liant et un agent conducteur ;
le matériau de cathode comprenant ou étant un composite noyau-enveloppe ayant une structure à noyau et enveloppe, le noyau comprenant un oxyde de métal de transition de lithium choisi dans le groupe constitué de LiMn₂O₄, LiNi_{0,3}Mn_{0,3}Co_{0,3}O₂, LiNi_{0,4}M_{0,4}Co_{0,2}O₂, LiNi_{0,5}Mn_{0,3}Co_{0,2}O₂, LiNi_{0,6}Mn_{0,2}Co_{0,2}O₂, LiNi_{0,8}Mn_{0,1}Co_{0,1}O₂, LiNi_{0,8}Co_{0,15}Al_{0,05}O₂ et les combinaisons de ceux-ci ; et l'enveloppe comprenant un oxyde de métal de transition de lithium choisi dans le groupe constitué de LiCoO₂, LiNiO₂, LiNi_{0,3}Mn_{0,3}Co_{0,3}O₂, LiNi_{0,4}Mn_{0,4}Co_{0,2}O₂, LiNi_{0,5}Mn_{0,3}Co_{0,2}O₂, LiNi_{0,6}Mn_{0,2}Co_{0,2}O₂, LiNi_{0,8}Mn_{0,1}Co_{0,1}O₂, LiNi_{0,8}Co_{0,15}Al_{0,05}O₂, LiMnO₂, LiMn₂O₄ et les combinaisons de ceux-ci ;
les oxydes de métal de transition de lithium dans le noyau et l'enveloppe étant différents ;
l'électrolyte comprenant un solvant organique non aqueux, un sel de lithium et un additif choisi dans le groupe constitué par le diéthylstilbestrol, la butanesultone, le carbonate de vinylène, le sulfure de diméthyle et les combinaisons de ceux-ci ; et
la quantité d'additif étant de 0,1% à 2% en poids, par rapport au poids total de l'électrolyte.

2. Le module de batterie selon la revendication 1, dans lequel le diamètre du noyau va de 5 µm à 45 µm et l'épaisseur de l'enveloppe va de 0,1 µm à 5 µm.

3. Le module de batterie selon la revendication 1, dans lequel l'oxyde de métal de transition de lithium dans le noyau est dopé avec un élément dopant choisi dans le groupe constitué de Fe, Ni, Mn, Al, Mg, Zn, Ti, La, Ce, Sn, Zr, Ru, Si, Ge et les combinaisons de ceux-ci.

4. Le module de batterie selon la revendication 1, dans lequel l'oxyde de métal de transition de lithium dans l'enveloppe est dopé avec un élément dopant choisi dans le groupe constitué par Fe, Ni, Mn, Al, Mg, Zn, Ti, La, Ce, Sn, Zr, Ru, Si, Ge, et les combinaisons de ceux-ci, et dans lequel l'élément dopant est présent en une quantité inférieure à 2% en poids, par rapport au poids total de la couche d'électrode de cathode.

5. Le module de batterie selon la revendication 4, dans lequel l'élément dopant est Al.

6. Le module de batterie selon la revendication 1, dans lequel le rapport du diamètre du noyau à l'épaisseur de l'enveloppe est de 5 à 25.

7. Le module de batterie selon la revendication 1, dans lequel chacun parmi le noyau et l'enveloppe comprend indépendamment deux ou plusieurs oxydes de métal de transition de lithium.

8. Le module de batterie selon la revendication 7, dans lequel les deux ou plusieurs oxydes de métal de transition de lithium ne sont pas uniformément répartis sur le noyau.

9. Le module de batterie selon la revendication 1, dans lequel la granulométrie D50 du matériau cathodique est de 10 µm à 50 µm.

10. Le module de batterie selon la revendication 1, dans lequel l'agent conducteur de la couche d'électrode cathodique comprend un nanotube de carbone et du graphène.

11. Le module de batterie selon la revendication 1, dans lequel la quantité de chacun des matériaux de cathode et d'anode est indépendamment comprise entre 80% et 95% en poids, par rapport au poids total de la couche d'électrode de cathode ou de la couche d'électrode d'anode, et dans lequel la quantité de chacun des agents conducteurs et des matériaux liants dans les couches d'électrode de cathode et d'anode est indépendamment comprise entre 3% et 10% en poids, par rapport au poids total de la couche d'électrode de cathode ou de la couche d'électrode d'anode, et dans lequel la densité de chacune parmi la couche d'électrode de cathode et la couche d'électrode d'anode est indépendamment de 1,0 g/cm³ à 6,5 g/cm³.

12. Le module de batterie selon la revendication 1, dans lequel la granulométrie D10 du matériau cathodique va de 3 µm à 20 µm, et la granulométrie D90 du matériau cathodique va de 20 µm à 80 µm.

13. Le module de batterie selon la revendication 1, dans lequel le séparateur a un point de fusion de 200°C ou plus.

14. Le module de batterie selon la revendication 1, dans lequel le séparateur comprend un matériau de base poreux et une couche poreuse protectrice appliquée sur une surface ou sur les deux surfaces du matériau de base poreux, et dans lequel la couche poreuse protectrice comprend un matériau formant liant et une charge minérale choisie parmi le groupe consistant en Al₂O₃, SiO₂, TiO₂, ZrO₂, BaOₓ, ZnO, CaCO₃, TiN, AlN, et les combinaisons de ceux-ci, x étant égal à 1 ou 2.

15. Le module de batterie selon la revendication 1, dans lequel chacune des cellules de batterie au lithium-ion comprend indépendamment une première languette conductrice reliée à la cathode et une deuxième languette conductrice reliée à l'anode, et dans lequel la largeur de chacune des première et deuxième languettes conductrices languettes est indépendamment supérieure à 2 cm.
